(19) Europäisches Patentamt
European Patent Office
Office européen des brevets

(11) **EP 2 301 102 B1**

(12) **EUROPÄISCHE PATENTSCHRIFT**

(45) Veröffentlichungstag und Bekanntmachung des Hinweises auf die Patenterteilung:
**15.04.2015 Patentblatt 2015/16**

(21) Anmeldenummer: **09765838.9**

(22) Anmeldetag: **16.06.2009**

(51) Int Cl.:
***H01M 8/10*** *(2006.01)*

(86) Internationale Anmeldenummer:
**PCT/EP2009/057467**

(87) Internationale Veröffentlichungsnummer:
**WO 2009/153258 (23.12.2009 Gazette 2009/52)**

(54) **VERWENDUNG EINES PROTONENLEITFÄHIGKEITVERLEIHENDEN MATERIALS BEI DER HERSTELLUNG VON BRENNSTOFFZELLEN**

USE OF A MATERIAL IMPARTING PROTON CONDUCTIVITY IN THE PRODUCTION OF FUEL CELLS

UTILISATION D UN MATÉRIAU CONFÉRANT UNE CONDUCTIVITÉ PROTONIQUE LORS DE LA FABRICATION DE CELLULES À COMBUSTIBLE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **16.06.2008 DE 102008002457**

(43) Veröffentlichungstag der Anmeldung:
**30.03.2011 Patentblatt 2011/13**

(73) Patentinhaber:
• **Elcomax Membranes Gmbh**
**81737 München (DE)**
• **Rhein Chemie Rheinau GmbH**
**68219 Mannheim (DE)**

(72) Erfinder:
• **ZISER, Torsten**
**69469 Weinheim (DE)**
• **FRÜH, Thomas**
**67112 Mutterstadt (DE)**
• **BAYER, Domnik**
**69121 Heidelberg (DE)**
• **MELZNER, Dieter**
**37075 Göttingen (DE)**
• **REICHE, Annette**
**37079 Göttingen (DE)**

(74) Vertreter: **Grättinger, Günter**
**Grättinger Möhring von Poschinger**
**Patentanwälte Partnerschaft**
**Wittelsbacherstraße 2b**
**82319 Starnberg (DE)**

(56) Entgegenhaltungen:
**EP-A- 1 845 573      EP-A- 1 890 351**
**US-A1- 2005 238 937**

**Beschreibung**

Die vorliegende Erfindung betrifft die Verwendung eines protonenleitfähigkeitverleihenden Materials bei der Herstellung von Brennstoffzellen.

Aus der DE 10 2007 011 427 ist die Verwendung von durch Emulsionspolymerisation hergestellten Polymerteilchen mit einem mittleren Teilchendurchmesser von 5 bis 500 nm, enthaltend ionogene Gruppen, als protonenliefernde und/oder protonenakzeptierende Substanz in heterogenen chemischen Prozessen bekannt. Die aus dem Latex der Emulsionspolymerisation gewonnenen Polymerteilchen weisen herstellungsbedingt eine regelmäßige kugelförmige Geometrie auf.

Diese aus der DE 10 2007 011 427 bekannten Materialien weisen ein noch zu verbesserndes Eigenschaftsspektrum auf. Insbesondere sind die Eigenschaften der Materialien im Hinblick auf den relativ hohen Gelgehalt verbesserungswürdig, da sich weniger stark vernetzte Systeme, also Systeme mit einem größeren Maschennetz in Polymeraufbau, für bestimmte Anwendungen, beispielsweise als Additiv in Materialien für die Brennstoffzellenherstellung, besser eignen können. Auch bestehen hinsichtlich der Änderung der mechanischen Eigenschaften von polymeren Materialien, in die die Polymerteilchen eingearbeitet werden, noch Raum für Verbesserungen.

Aus DE 10 2007 011 424 (WO2008107192A1) sind Polymerelektrolytmembranen bekannt, die eine Polymermatrix aus mindestens einem basischen Polymer und eine oder mehreren Dotierungsmitteln bestehen, wobei die ionogen Gruppen enthaltenden Teilchen mit einem mittleren Teilchendurchmesser im Nanometerbereich in die Polymermatrix eingebettet sind und die ionogenen Gruppen enthaltenden Teilchen in einer Konzentration von weniger als 50%, bezogen auf die Polymermatrix, homogen in der Polymermatrix verteilt sind. Diese, mittels Emulsionspolymerisation hergestellte Polymermatrix verfügt ebenfalls noch nicht über das optimale Eigenschaftsprofil.

Eine Brennstoffzelle ist eine galvanische Zelle, welche die chemische Reaktionsenergie eines kontinuierlich zugeführten Brennstoffes und eines Oxidationsmittels in elektrische Energie wandelt. Die Gewinnung von elektrischer Energie aus chemischen Energieträgern erfolgt heute zumeist durch Verwendung in einer Wärmekraftmaschine in Verbindung mit einem Generator über den Umweg der thermischen und der Bewegungsenergie. Die Brennstoffzelle ist geeignet, die Umformung ohne Umweg zu erreichen und damit potentiell effizienter zu sein.

Eine Brennstoffzelle besteht aus Elektroden, die durch eine Membran oder durch einen Elektrolyt (Ionenleiter) voneinander getrennt sind. Neben den Elektroden bildet der Elektrolyt damit einen wichtigen Bestandteil einer elektrochemischen Zelle. Er sollte elektrisch isolieren, da er neben seiner Funktion als Protonenleiter gleichzeitig als Separator der beiden Elektrodenräume dient, und thermisch sowie mechanisch stabil sein. Während früher häufig flüssige Elektrolyte Verwendung fanden, geht heute aus Gründen der Lage, der Unabhängigkeit und der Stabilität der Zellen der Trend immer mehr zu festen Elektrolyten. Die Definition von fest reicht hierbei von gel- oder gummiartig bis keramisch.

Die Phosphorsäurebrennstoffzelle unterscheidet sich von anderen Brennstoffzellen dadurch, dass sie mit Phosphorsäure als Elektrolyt arbeitet. Die hoch konzentrierte Phosphorsäure, welche in Konzentrationen von 90 bis 100 % verwendet wird, ist häufig in einer PTFE-Phasenstruktur fixiert. Als Brenngas dient bei der Phosphorsäurebrennstoffzelle Wasserstoff, während als Oxidationsmittel Luft oder reiner Sauerstoff eingesetzt werden kann.

Die Polymerelektrolytbrennstoffzelle ist eine Niedrigtemperatur-Brennstoffzelle, welche unter Verwendung von Wasserstoff und Sauerstoff chemische und elektrische Energie umwandelt. Der elektrische Wirkungsgrad beträgt je nach Arbeitspunkt etwa 60 %. Als Elektrolyt dient dabei normalerweise eine fest Polymermembran, beispielsweise aus Nafion® (auf Basis perfluorierter Sulfonsäuregruppen enthaltender Polymere),

Die Membranen sind beidseitig mit einer katalytisch aktiven Elektrode beschichtet, häufig einer Mischung aus Kohlenstoff (Ruß) und einem Katalysator, häufig Platin oder ein Gemisch aus Platin mit Ruthenium (PtRu-Elektroden), Platin mit Nickel (PtNi-Elektroden) oder Platin mit Kobalt (PtCo-Elektroden). Wasserstoffmoleküle dissoziieren auf der Anodenseite und werden unter Abgabe von zwei Elektronen zu je zwei Protonen oxidiert, Diese Protonen diffundieren durch die Membran. Auf der Kathodenseite wird Sauerstoff durch die Elektronen, die zuvor elektrische Arbeit verrichten konnten, reduziert; zusammen mit den durch den Elektrolyt transportierten Protonen entsteht Wasser. Um die elektrische Arbeit nutzen zu können, werden Anode und Kathode an einen elektrischen Verbraucher angeschaltet.

Aufgrund der Bindung des Ladungstransports in diesen Membranen an die Anwesenheit von Wasser ist der Betriebsbereich entsprechender Polymerelektrolytmembran-Brennstoffzellen jedoch auf maximal 100 °C beschränkt. Um eine höhere Betriebstemperatur zu erzielen, wurden Membranen für Brennstoffzellen vorgeschlagen, welche anorganische Teilchen aufweisen (vgl. DE 199 19 988 A1, DE 102 05 849 A1, WO 03/063266 A2 und WO 03/081691 A2).

DE 10 2004 009 396 A1 beschreibt Membranen für Brennstoffzellen mit verbesserten elektrischen, mechanischen und thermischen Eigenschaften im Brennstoffzellenbetrieb. Diese Membranen bestehen aus einem Polymer, besonders bevorzugt aus einem Kunststoff, einem Naturstoff, Silikon oder Kautschuk, und einer protonenleitenden Substanz. Derartige Membranen weisen jedoch keine technisch signifikanten Leitfähigkeiten bei Raumtemperatur auf und zeigen eine geringe mechanische Stabilität.

Die in diesen Brennstoffzellen verwendeten Membranen sind somit noch verbesserungswürdig. Verbesserungswürdig sind dabei insbesondere die Membraneigenschaften im Allgemeinen und insbesondere im Hinblick auf Leitfähigkeit, mechanische und thermische Stabilität, Quellung und Kompatibilität zu den verwendeten Elektroden, Diese Membraneigenschaften können im Allgemeinen mit Hilfe von Additiven verbessert werden, Hierzu stehen jedoch bisher keine Polymeradditive mit einem entsprechenden Eigenschaftsprofil zur Verfügung,

Die Aufgabe der vorliegenden Erfindung ist es demgemäss Protonenleitfähigkeit verleihende Additive bereitzustellen, die - beispielsweise im Vergleich zu den aus DE 10 2007 011 427 bekannten Materialien - einen geringeren Verzweigungsgrad aufweisen und beispielsweise in Membranen, welche insbesondere in Phosphorsäurebrennstoffzellen und Polymerelektrolytbrennstoffzellen eingesetzt werden, verwendet werden können,

Insbesondere ist es die Aufgabe der vorliegenden Erfindung, Additive für Membranen in Phosphorsäurebrennstoffzellen oder Polymerelektrolytbrennstoffzellen zur Verfügung zu stellen, welche die Leitfähigkeit verbessern.

Eine weitere Aufgabe der vorliegenden Erfindung ist es, Additive für Membranen in Phosphorsäurebrennstoffzellen oder Polyrnerelektrolytbrennstoffzellen zur Verfügung zu stellen, welche die mechanische und thermische Stabilität der Membrane verbessern.

Eine weitere Aufgabe der vorliegenden Erfindung ist es insbesondere Additive für Membranen in Phosphorsäurebrennstoffzellen oder Polymerelektrolytbrennstoffzellen bereitzustellen, welche ein gutes Quellverhalten aufweisen.

Die dabei verwendeten Additive sollten vorzugsweise eine gute Verträglichkeit, d.h. insbesondere Mischbarkeit, mit den jeweiligen Membranmaterialien aufweisen.

Die erfindungsgemäß bereitgestellten Additive sollten möglichst über einen hohen Anteil an säure- oder basisch modifizierten Monomeren und eine hohe Transparenz verfügen und eine gute Kompabilität zu der Membran aufweisen.

Weiterhin bestand der Wunsch, Elektrodenmaterialien für Brennstoffzellen, wie für Gasdiffusionselektroden für Hochtemperatur-Polymerelektrolyt-Brennstoffzellen mit einer verbesserten Leistungsdichte und Langzeitstabilität bereitzustellen, bei der die Katalysatorschicht eine gute Haftung und protonenleitende Anbindung auf einer Gasdiffusionsschicht und/oder einer Polymerelektrolytmembran zeigt und eine dauerhaft hohe Stabilität bei Betriebsbedingungen oberhalb 100 °C aufweist. Weitere Aufgaben der Erfindung bestehen darin, Verfahren zur effektiven Herstellung derartiger Gasdiffusionselektroden und Brennstoffzellen für Betriebstemperaturen bis 200 °C oder sogar bis 250 °C unter Verwendung dieser Gasdiffusionselektroden bereitzustellen.

Gelöst werden die vorstehend beschriebenen Aufgabenstellungen durch die neue Anwendung eines Protonenleitfähigkeit verleihenden Materials, welches aus Monomereinheiten aufgebaut ist und eine unregelmäßige Form aufweist gemäß Anspruch 1 und Anspruch 16.

Gegenstand der Erfindung ist insbesondere die Verwendung eines Protonenleitfähigkeit verleihenden polymeren Materials, worin das polymere Material bevorzugt aus sauer und/oder basisch modifizierten Monomereinheiten aufgebaut ist und eine unregelmäßige Form aufweist.

Der Begriff "Protonenleitfähigkeit verleihendes Material" bedeutet im Rahmen der vorliegenden Erfindung ein Material, welches als Protonenakzeptor und/oder als Protonendonor wirken kann und somit insbesondere auch eine Delokalisierung und/oder den Transport von Protonen erlaubt. Dies bedingt im Allgemeinen die Anwesenheit von sauren und/oder basischen funktionellen Gruppen, welche Protonen abgeben können, wie saure Gruppen, wie Carboxylgruppen, Sulfonsäuregruppen etc., oder Protonen aufnehmen können, wie basische Gruppen, wie insbesondere Aminogruppen, Mit sauren Gruppen modifizierte Protonenleitfähigkeit verleihende Materialien weisen somit basenakzeptierende Eigenschaften auf, während mit basischen Gruppen modifizierte Protonenleitfähigkeit verleihende Materialien somit insbesondere säurenakzeptierende Eigenschaften aufweisen.

Die erfindungsgemäßen verwendeten Protonenleitfähigkeit verleihenden Materialien sind im Allgemeinen auch selbst protonenleitfähig, erlauben also insbesondere beispielsweise die Herstellung von Membranen, die eine Leitung von Protonen durch die Membran erlauben. Dies lässt sich beispielsweise durch Leitfähigkeits-, Widerstandsmessungen etc. feststellen.

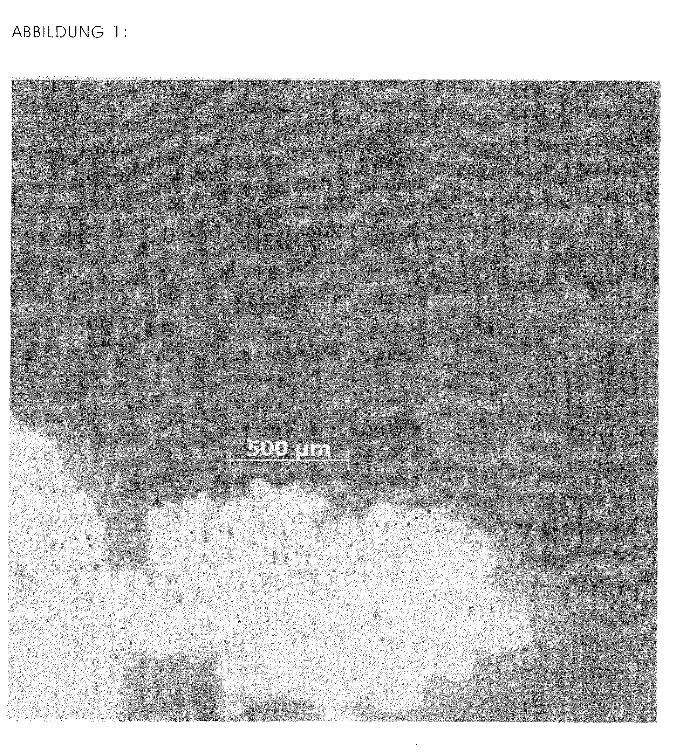

Im Rahmen der vorliegenden Erfindung wird unter einer unregelmäßigen Form insbesondere jede Form von Teilchen verstanden, die nicht nahezu kugelförmig ist. Eine "nahezu kugelförmige" Geometrie bedeutet, dass die Teilchen bei deren Ansicht, beispielsweise einem Elektronenmikroskop, erkennbar im Wesentlichen eine kreisförmige Fläche bilden. Insbesondere weisen die erfindungsgemäß verwendeten Materialien, die im allgemeinen in der Form trockener Pulver bereitgestellt werden, durch Zerkleinerungs- und Mahlprozesse Ecken bzw. Zacken auf. Ein Beispiel für die Ecken und Kanten der erfindungsgemäßen Teilchen ist in Figur 1 abgebildet. Bei Figur 1 handelt es sich um eine lichtmikroskopische Aufnahme der Probe 3 (DB 43) der Beispiele. Dadurch unterscheiden sich die erfindungsgemäßen Materialen insbesondere von durch Emulsionspolymerisation hergestellten Polymeren, welche herstellungsbedingt (Mizellen) im allgemeinen eine erkennbar kugelförmige Geometrie aufweisen.

Erfindungsgemäß wurde gefunden, dass die erfindungsgemäß verwendeten Protonenleitfähigkeit verleihenden polymeren Materialien, welche im Allgemeinen weitmaschig, aber dreidimensional vernetzt sind, das Eigenschaftsprofil von Membranen und Gasdiffusionselektroden für Brennstoffzellen verbessern.

Darüber hinaus weisen die erfindungsgemäß verwendeten Protonenleitfähigkeit verleihenden Materialien eine gute Kompatibilität zu den Matrixmaterialien von Membranen auf, welche in Phosphorsäurebrennstoffzellen, Polymerelekrolytbrennstoffzellen verwendet werden, und sie weisen eine gute Kompatibilität zu den Matrixmaterialien von Katalysatorschichten von Gasdiffusionselektroden für Polymerelektrolyt-Brennstoffzellen mit einer Arbeitstemperatur bis 250 °C auf.

Mit den erfindungsgemäßen Protonenleitfähigkeit verleihenden Materialien werden insbesondere Additive bereitgestellt, welche ihre Wirksamkeit in konzentrierter Phosphorsäure und bei hohen Temperaturen von mehr als 120 °C im Betrieb beibehalten.

In einer bevorzugten Ausführungsform der vorliegenden Erfindung ist das protonenleitfähigkeitverleihende polymere Material mit einem Vernetzer vernetzt.

In Phosphorsäurebrennstoffzellen wird häufig die Polymermatrix durch Polybenzimidazol (PBI, Poly-[2,2'-(m-phenylen)-5,5'-dibenzimidazol]) gebildet. PBI ist mit einer Glasübergangstemperatur von 425 °C und mit einer thermischen Langzeitbelastung von bis zu 310 °C für den Einsatz in dieser Temperaturregion geeignet. Weiterhin ist das Material elektrisch isolierend, was eine Grundvoraussetzung für den Einsatz als Membranmaterial in einer Brennstoffzelle ist. PBI ist allerdings thermoplastisch und nicht flexibel. Daraus entstehen Nachteile für die Handhabbarkeit der Membranen beispielsweise im Produktionsprozeß (erhöhte Ausschußrate) und im Betrieb (Möglichkeit des Ausfalls durch Erschütterungen). Erfindungsgemäß wurde nun herausgefunden, dass die erfindungsgemäßen Protonenleitfähigkeit verleihenden Materialien im Gegensatz zu dem Polybenzimidazol bei Betriebstemperatur flexible Polymerketten mit einem nicht zu hohen Vernetzungsgrad aufweisen. Dieses führt zu einer Verbesserung dieser Situation. Daher sind die erfindungsgemäßen Protonenleitfähigkeit verleihenden Materialien, welche den zuvor erwähnten Vernetzungsgrad aufweisen, bevorzugt.

Das erfindungsgemäße Protonenleitfähigkeit verleihende Material weist vorzugsweise Monomereinheiten auf Basis mindestens einer Verbindung auf, welche ausgewählt ist aus der Gruppe, bestehend aus Styrol, Ethylenglykolmethacrylatphosphat (MAEP), Vinylsulfonsäure (VSS), Styrolsulfonsäure (SSS), Vinylphosphonsäure (VPS), N-Vinylimidazol (VID), 4-Vinylpyridin (VP), N-[3-(Dimethylamino)propyl]methacrylamid (DMAPMA), Dimethylaminoethylmethacrylat (DMAEMA), Acrylamid, 2-Acrylamidoglykolsäure, 2-Acrylamido-2-methyl-1 -propansulfonsäure, Acrylsäure-[2-(((Butylamino)-carbonyl)-oxy)ethylester], Acrylsäure-(2-diethylaminoethylester), Acrylsäure-(2-(dimethylamino)-ethylester), Acrylsäure-(3-(dimethylamino)-propylester), Acrylsäure-isopropylamid, Acrylsäurephenylamid, Acrylsäure-(3-sulfopropylester)-Kaliumsalz, Methacrylsäureamid, Methacrylsäure-2-aminoethylester-hydrochlorid, Methacrylsäure-(2-(tert.-butylamino)-ethylester), Methacrylsäure-((2-dimethylamino)-methylester), Methacrylsäure-(3-dimethylaminopropylamid), Methacrylsäureisopropylamid, Methacrylsäure-(3-sulfopropylester)-Kaliumsalz, 3-Vinylanilin, 4-Vinylanilin, N-Vinylcaprolactam, N-Vinylformamid, 1-Vinyl-imidazol, 2-Vinyl-pyridin, 4-Vinylpyridin, 1-Vinyl-2-pyrrolidon, 5-Vinyluracil, Methacrylsäureglycidylester (GDMA), Mischungen der zuvor genannten Verbindungen, Salze der zuvor genannten Verbindungen und die konjugierten Säuren oder Basen der zuvor genannten Verbindungen. Liegen die Verbindungen als Salze vor, so können Sie gegebenenfalls vor der Polymerisation in die neutralen organischen Monomere überführt werden.

In einer Ausführungsform der Erfindung beträgt der Gewichtsanteil dieser monofunktionellen Monomere bei der Herstellung der erfindungsgemäßen Materialien, bezogen auf 100 Gewichtsteile, insbesondere 100 Gew.-%, aller Monomere (einschließlich der vernetzenden Monomere) im Allgemeinen 0,1 bis 100 Gew,-%, besonders bevorzugt 10 bis 99,0 Gew,-%, vorzugsweise 30 bis 98 Gew,-%, wobei es sich bei den übrigen Monomeren im allgemeinen um polyfunktionelle Monomere handelt, wie die weiter unten genannten.

In einer anderen, bevorzugten Ausführungsform der Erfindung beträgt der Gewichtsanteil dieser monofunktionellen Monomere, bezogen auf 100 Gewichtsteile (insbesondere 100 Gew.-%) aller Monomere (einschließlich der vernetzenden Monomere), 40 bis 100 Gew,-%, besonders bevorzugt 50 bis 99,0 Gew.-%, ganz besonders bevorzugt >50 bis 98 Gew,-%, wobei es sich bei den übrigen Monomeren im allgemeinen um polyfunktionelle Monomere handelt, wie die weiter unten genannten.

Das erfindungsgemäße Material weist vorzugsweise einen Quellungsindex von 0,5 bis 50, vorzugsweise 3 bis 45, besonders bevorzugt 3 bis 35, ganz besonders bevorzugt 3 bis 25, auf. Der Quellungsindex wird wie im Beispielteil beschrieben ermittelt.

Die erfindungsgemäßen Protonenleitfähigkeit verleihenden Materialien weisen vorzugsweise ionogene Gruppen auf. Ionogene Gruppen sind erfindungsgemäß solche Gruppen, die ionisch sind oder zur Bildung ionischer Gruppen befähigt sind. Sie vermögen auf diese Weise protonenliefernd und/oder protonenakzeptierend zu sein. Bevorzugt handelt es sich bei den ionogenen Gruppen um saure oder basische Gruppen, welche über Monomere eingeführt werden, die basische und/oder saure funktionelle Gruppen aufweisen. Besonders bevorzugt weist das erfindungsgemäße Material basische Gruppen auf.

In einer bevorzugten Ausführungsform der vorliegenden Erfindung besteht das protonenleitfähigkeitverleihende polymere Material aus monofunktionellen Monomereinheiten, die durch basische und/oder sauere Gruppen modifiziert sind, und gegebenenfalls polyfunktionellen Monomereinheiten (Vernetzer).

In einer bevorzugten Ausführungsform der vorliegenden Erfindung ist das polymere Material mit einem Vernetzer vernetzt.

In einer bevorzugten Ausführungsform der vorliegenden Erfindung weist das polymere Material Monomereinheiten auf, die basische und/oder saure Gruppen aufweisen.

In einer bevorzugten Ausführungsform der vorliegenden Erfindung besteht das polymere Material aus monofunktionellen Monomereinheiten, die durch basische und/oder saure Gruppen modifiziert sind, und gegebenenfalls polyfunktionellen Monomereinheiten (Vernetzer).

In einer bevorzugten Ausführungsform der vorliegenden Erfindung ist das polymere Material mit einem neutralen oder basischen Vernetzer vernetzt.

In einer bevorzugten Ausführungsform der vorliegenden Erfindung werden die ionogenen Gruppen, insbesondere die protonenliefernden und/oder protonenakzeptierenden Gruppen, ausgewählt aus einer oder mehreren der folgenden sauren funktionellen Gruppen: $-COOH$, $-SO_3H$, $-OSO_3H$, $-P(O)(OH)_2$, $-O-P(OH)_2$ und $-O-P(O)(OH)_2$ und/oder deren Salzen und/oder deren Derivate, wie insbesondere Partialester davon. Die Salze stellen die konjugierten Basen zu den sauren funktionellen Gruppen dar, also $-COO^-$, $-SO_3^-$, $-OSO_3^-$, $-P(O)_2(OH)^-$ oder $-P(O)_3^{3-}$, $-O-P(O)_2^{2-}$ und $-OP(O)_2(OH)^-$ oder $-OP(O)_3^{2-}$ in der Form ihrer Metall-, bevorzugt Alkalimetall- oder Ammoniumsalze, besonders bevorzugt Natrium- oder Kaliumsalze.

In einer weiteren bevorzugten Ausführungsform der vorliegenden Erfindung werden die ionogenen Gruppen, insbesondere die protonenliefernden und/oder protonenakzeptierenden Gruppen ausgewählt aus einer oder mehreren der folgenden basischen funktionellen Gruppen: $-NR_2$, worin R ausgewählt wird aus Wasserstoff, Alkyl oder Aryl. Bevorzugt is R Wasserstoff und/oder Alkyl mit 1 bis 18, bevorzugt 1 bis 10, noch bevorzugter 1 bis 6 Kohlenstoffatomen. Besonders bevorzugt ist $-NR_2$ Dialkylamino, wie insbesondere Dimethylamino. Die basischen Gruppen können auch in Form ihrer Säureadditionssalze vorliegen, wie insbesondere als Hydrochloride, Auch die konjugierten Basen der oben genannten sauren funktionellen Gruppen können als basische Gruppen verwendet werden, wie beispielsweise eine Carboxylatgruppe, wie $-COONa$,

Erfindungsgemäß besonders bevorzugt ionogene Gruppen im Sinne der Erfindung werden ausgewählt aus $-SO_3H$, $-PO(OH)_2$, $-O-P(O)(OH)_2$ und/oder deren Salze und/oder deren Derivate, wie insbesondere Partialester davon, sowie besonders bevorzugt aus den basischen Gruppen $-NR_2$ und deren Säureadditionssalze wie zuvor definiert.

Der Vorteil bei der Verwendung von basischen funktionellen Gruppen bzw. von Monomeren, die solche Gruppen aufweisen, besteht beispielsweise darin, dass insbesondere die Quellung von Polymeren, in welche die entsprechenden erfindungsgemäßen Materialien eingearbeitet werden, in sauren Medien verbessert wird.

Aufgrund der Modifizierung der erfindungsgemäßen Materialien mit den ionogenen Gruppen ist es möglich, dass die erfindungsgemäßen Protonenleitfähigkeit verleihenden Materialien beispielsweise auf die Phosphorsäure möglichst attraktiv wirken. Unter der Eigenschaft "attraktiv" wird im Rahmen der vorliegenden Erfindung verstanden, dass durch das erfindungsgemäße Material der Ladungstransport unterstützt wird. Daher ist eine basische oder saure Modifizierung bevorzugt. Insbesondere bevorzugt ist diesbezüglich, dass das Polymer durch basische Gruppe modifiziert ist.

Das Protonenleitfähigkeit verleihende Material der vorliegenden Erfindung kann mit einem neutralen oder basischen Vernetzer vernetzt werden. Das erfindungsgemäße Material kann auch dadurch mit basischen Gruppen versehen werden, dass die vorstehenden Monomere mit einem basischen Vernetzer vernetzt sind. Der basische Vernetzer kann beispielsweise Triallylamin sein.

Die erfindungsgemäßen Materialien sind besonders bevorzugt vernetzte Materialien. Sie werden im allgemeinen durch radikalische Polymerisation radikalisch polymerisierbarer Monomere in Lösung- oder in Masse hergestellt, wobei die Polymerisation mit üblichen Radikalstartern gestartet wird.

Die Vernetzung des polymeren Materials erfolgt im Allgemeinen durch mindestens eine der folgenden Maßnahmen:

a) durch Copolymerisation mit vernetzend wirkenden multifunktionellen Verbindungen (sogenannten Vernetzern),
b) durch nachträgliche Vernetzung nach der Polymerisation mittels Vernetzungsmitteln bzw. Vulkanisationsmittel oder durch energiereiche Strahlung, beispielsweise mit Licht einer Wellenlänge von weniger als 600 nm, bevorzugt weniger als 400 nm,
c) durch Fortführung der Polymerisation bis zu hohen Umsätzen, wie von mindestens etwa 80 mol-% bezogen auf die Gesamtmenge aller Monomere,
d) im Monomerzulaufverfahren durch Polymerisation mit hohen internen Umsätzen, wie von mindestens etwa 80 mol-% bezogen auf die Gesamtmenge der bereits zugelaufenen Monomere.

Die Vernetzung des polymeren Materials erfolgt insbesondere auch durch mindestens eine der folgenden Maßnahmen:

a) durch Copolymerisation in Schmelze oder in Lösung mit vernetzend wirkenden multifunktionellen Verbindungen (Vernetzer),
b) durch nachträgliche Vernetzung nach der Polymerisation mittels Vernetzungsmitteln oder durch energiereiche Strahlung,

c) durch Fortführung der Polymerisation in Schmelze oder in Lösung bis zu hohen Umsätzen,

d) im Monomerzulaufverfahren durch Polymerisation in Schmelze oder in Lösung mit hohen internen Umsätzen und nach der Vernetzung das polymere Material mindestens einem Zerkleinerungsprozess unterworfen wird.

Bei der Polymerisation in Schmelze oder in Lösung handelt es sich um im Stand der Technik bekannte Verfahren.

Dabei ist die Direktvernetzung während der Polymerisation mit vernetzend wirkenden multifunktionellen Verbindungen (Vernetzern) die bevorzugte Vernetzungsmethode.

Als Vernetzer eignen sich insbesondere Verbindungen, die ausgewählt werden aus der Gruppe, bestehend aus: Multifunktionellen Monomeren mit mindestens zwei, vorzugsweise 2 bis 4 copolymerisierbaren C=C-Doppelbindungen, wie vorzugsweise Diisopropenylbenzol, Divinylbenzol, Trivinylbenzol, Divinylether, Divinylsulfon, Diallylphthalat, Triallylcyanurat, Triallylisocyanurat, 1,2-Polybutadien, N,N'-m-Phenylenmaleimid, 2,4-Toluylenbis(maleimid) und/oder Triallyltrimellitat, Acrylate und Methacrylate von mehrwertigen, vorzugsweise 2- bis 4-wertigen C2 bis C10 Alkoholen, wie vorzugsweise Ethylenglykol, Propandiol-1,2, Butandiol, Hexandiol, Polyethylenglykol mit 2 bis 20, vorzugsweise 2 bis 8 Oxyethyleneinheiten, Neopentylglykol, Bisphenol-A, Glycerin, Trimethylolpropan, Pentaerythrit und Sorbit, wie vorzugsweise Trimethylolpropantrimethacrylat (TMPTMA), Dimethylenglykoldimethacrylat (EGDMA), ungesättigten Polyestern aus aliphatischen Di- und Polyolen und Maleinsäure, Fumarsäure, und/oder Itaconsäure und Polyallylaminen, wie Triallylamin.

Erfindungsgemäß sind als Vernetzer besonders bevorzugt: Acrylate und Methacrylate von mehrwertigen Alkoholen, vorzugsweise 2- bis 4-wertigen C2 bis C10 Alkoholen, wie am meisten bevorzugt: Trimethylolpropantrimethacrylat (TMPTMA).

Im Rahmen der vorliegenden Erfindung ist es bevorzugt, dass der Gewichtsanteil an Vernetzern, bezogen auf die Gesamtmenge, insbesondere das Gewicht aller Monomere (Vernetzungsgrad) in dem erfindungsgemäßen Protonenleitfähigkeit verleihenden Material, im Allgemeinen 0, bevorzugt mehr als 0 Gew.-%, bevorzugt mehr als 0 Gew.-% bis 15 Gew.-%, bevorzugter mehr als 0,5 Gew.-% bis 15 Gew,-%, besonders bevorzugt 0,50 bis 10 Gew.-%, vorzugsweise 1,0 bis 8 Gew,-%, beträgt.

In den protonenleitfähigkeitsverleihenden Materialien bezeichnet der Vernetzungsgrad im Rahmen der vorliegenden Erfindung den Gewichtsanteil der vernetzenden Monomere (sogenannte Vernetzer mit einer Funktionalität >1, bevorzugt >2,) zur Gesamtmasse aller Monomere.

Der Vorteil bei der Verwendung von basischen Vernetzern ist, dass in den entsprechenden Polymeren bei ihrer Anwendung in der Phosphorsäure/PBI-Membran basische Zentren geschaffen werden, die einerseits die Protolyse des sauren Elektrolyten erleichtern und andererseits die Aufnahme des Elektrolyten in die Membran verbessern.

Ein weiterer positiver Effekt der Erhöhung der Anzahl basischer Zentren ist eine erhöhte Phosphorsäureaufnahme, was wiederum zu mehr potentiellen Ladungsträgern im System führt.

Als Radikalstarter bei der Herstellung der erfindungsgemäßen Materialien können übliche Radikalstarter eingesetzt werden, wie organischen Peroxide, insbesondere Dicumylperoxid, tert.-Butylcumylperoxid, Bis-(tert,-butylperoxy-isopropyl)benzol, Di-tert,-butylperoxid, 2,5-Dimethylhexan-2,5-dihydroperoxid, 2,5-Dimethylhexin-3,2,5-dihydroperoxid, Dibenzoylperoxid, Bis-(2,4-dichlorobenzoyl)peroxid, tert.-Butylperbenzoat, organische Azoverbindungen, insbesondere Azo-bis-isobutyronitril und Azo-bis-cyclohexannitril. Bevorzugt werden organische Azoverbindungen, insbesondere Azo-bis-isobutyronitril, verwendet.

Diese Radikalstarter können auch als Vernetzungsmittel (oder Vulkanisationsmittel) im Sinne der vorliegenden Anmeldung bei der nachträglichen Vernetzung nach der Polymerisation gemäß oben erwähnter Variante b) eingesetzt werden. Dabei wird die Vernetzung bei Verwendung von Radikalstartern durch freie Radikale, die sich aus der Zersetzung der Radikalstarter bilden, bewirkt. Auch eine nachträgliche Vernetzung mittels energiereicher Strahlung ist möglich.

Erfindungsgemäß kann eine Vernetzung nachträglich, nach der Polymerisation insbesondere mittels Vernetzungsmitteln (Vulkanisationsmitteln) erfolgen, die bevorzugt aus der Gruppe ausgewählt werden, die umfasst: organische Peroxide, insbesondere Dicumylperoxid, tert.-Butylcumylperoxid, Bis-(tert,-butyl-peroxy-isopropyl)benzol, Di-tert,-butylperoxid, 2,5-Dimethylhexan-2,5-dihydroperoxid, 2,5-Dimethylhexin-3,2,5-dihydroperoxid, Dibenzoylperoxid, Bis-(2,4-dichlorobenzoyl)peroxid, tert.-Butylperbenzoat, organische Azoverbindungen, insbesondere Azo-bisisobutyronitril und Azo-bis-cyclohexannitril, schwefelhaltige Vernetzungs-bzw. Vulkanisationsmittel, wie Di- und Polymercoptoverbindungen, insbesondere Dimercaptoethan, 1,6-Dimercaptohexan, 1,3,5-Trimercaptotriazin und Mercapto-terminierte Polysulfidkautschuken, insbesondere Mercapto-terminierte Umsetzungsprodukte von Bis-Chlorethylformal mit Natriumpolysulfid.

Im Rahmen der vorliegenden Erfindung ist es insbesondere bevorzugt, wenn das erfindungsgemäße polymere Material Monomereinheiten mindestens auf Basis von N-[3-(Dimethylamino)propyl]methacrylamid (DMAPMA) aufweist.

In einer besonders bevorzugten Ausführungsform bestehen die monofunktionellen Monomere des erfindungsgemäßen polymeren Materials ausschließlich aus N-[3-(Dimethylamino)propyl]methacrylamid (DMAPMA), neben bevorzugt vorhandenen Vernetzern.

Darüber hinaus ist es bevorzugt, wenn das Protonenleitfähigkeit verleihende Material der vorliegenden Erfindung als Vernetzer Monomereinheiten mindestens auf Basis von Trimethylolpropantrimethacrylat (TMPTMA) aufweist.

Insbesondere bevorzugt ist es, wenn das Protonenleitfähigkeit verleihende Material Monomereinheiten mindestens auf Basis von N-[3-(Dimethylamino)propyl]methacrylamid (DMAPMA) aufweist und als Vernetzer mindestens Trimethylolpropantrimethacrylat (TMPTMA) verwendet wird. Besonders bevorzugt besteht das Protonenleitfähigkeit verleihende Material aus diesen beiden Monomeren.

In einer weiteren bevorzugten Ausführungsform wird das Protonenleitfähigkeit verleihende Material nach der Polymerisation einer Vernetzung mit schwefelhaltigen Vernetzungs- bzw. Vulkanisationsmitteln (Schwefelvernetzung) unterworfen, wie durch Behandlung mit Di- und Polymercaptoverbindungen, insbesondere Dimercaptoethan, 1,6-Dimercaptohexan, 1,3,5-Trimercaptotriazin und Mercapto-terminierte Polysulfidkautschuken, insbesondere Mercapto-terminierte Umsetzungsprodukte von Bis-Chlorethylformal mit Natriumpolysulfid.

Das Protonenleitfähigkeit verleihende Material weist zweckmäßigerweise in Toluol bei 23 °C unlösliche Anteile (Gelgehalt) von im Allgemeinen 50 bis 99 Gew.-%, vorzugsweise 60 bis 90, besonders bevorzugt 63 bis 80 Gew.-%, auf.

Der Gelgehalt wurde durch kontinuierliche Extraktion mit Toluol bestimmt. Hierzu wurde eine Probenmenge von etwa 3 g in einen Soxhlet-Extraktionsapparatur eingewogen und 16 Stunden im Lösungsmittelrückfluss extrahiert.

Der Gelgehalt wird folgendermaßen als Massenquotient berechnet ;

$$Ge\lg ehalt = \frac{m_{\text{Probe,nach Extraktion}}}{m_{\text{Probe,vor Extraktion}}} \cdot 100\%$$

Darüber hinaus weist das erfindungsgemäße Protonenleitfähigkeit verleihende Material einen mittleren Teilchendurchmesser von im Allgemeinen kleiner 50 $\mu$m, vorzugsweise kleiner als 40 $\mu$m, besonders bevorzugt kleiner als 30 $\mu$m, insbesondere kleiner als 25 $\mu$m, auf. Dieser Teilchendurchmesser wird nach der Polymerherstellung nach einer Zerkleinerungsbehandlung erhalten, welche weiter unten beschrieben wird.

Die mittlere Teilchengröße wird im Rahmen der vorliegenden Erfindung durch dynamische Lichtstreuung bestimmt. Die Lichtstreuungsmessungen zur Bestimmung der Teilchengrößenverteilungen wurden im Labor für Prozessanalyse (Betriebslabor) der Firma Rhein Chemie Rheinau GmbH wie folgt durchgeführt.

Hierfür wurde das Lichtstreuungsmessgerät Coulter LS 230 mit SVM (small volume module) verwendet. Das "Light-Scattering" Korngrößenanalysegerät LS 230 verwendet für den Messbereich von 0,4 bis 2000 $\mu$m eine binokulare Optik, Im Bereich der Mie-Streuung bildet die PIDS-Technologie (Polarization Intensity Differential Scattering) die Grundlage für die Messung, die mit weißem Licht der Wellenlängen 450, 600 und 900 nm durchgeführt wird. Das Licht wird jeweils vertikal und horizontal polarisiert und die Streulichtintensität der Senkrechtstreuung in 6 Detektionswinkeln erfasst. Die Differenz der entsprechenden Streulichtintensitäten der unterschiedlichen Polarisationsebenen ergibt das sogenannte PIDS-Muster, das signifikant von der Partikelgröße abhängt, Damit wird insgesamt ein Messbereich von 0,04 $\mu$m bis 2000 $\mu$m ohne Veränderung der Optik ermöglicht. Die 151 Detektoren bestehen aus kreisringförmig angeordneten Segmenten und realisieren eine Messung in 116 Größenklassen, die logarithmisch geteilt sind und stellen damit geometrisch ähnliche Kornklassen dar. Durch die hohe Anzahl an Kornklassen wird eine hohe Auflösung der Korngrößenverteilung erzielt. Der Messbereich von 0,04 $\mu$m bis 2000 $\mu$m in 116 logarithmisch geteilte Kornklassen wird durch die Reihenschaltung von zwei Messzellen für Laserbeugungsmessung und PIDS-Messung realisiert.

Die erfindungsgemäß verwendeten mittleren Durchmesserangaben beziehen sich hierbei auf das Gewichtsmittel ($d_{50}$).

Das polymere Material weist bevorzugt einen gewichtsmittleren Teilchendurchmesser ($d_{50}$) von kleiner als 50 $\mu$m auf.

Da die erfindungsgemäß hergestellten Materialien nicht durch Emulsionspolymerisation hergestellt werden sondern durch Polymerisation in Masse oder in Lösung und anschließender Zerkleinerung (gegebenenfalls nach vorheriger Trocknung), weisen sie im allgemeinen größere mittlere Teilchendurchmesser auf als Teilchen, die durch Emulsionspolymerisation hergestellt werden. So liegen die mittleren Teilchendurchmesser der erfindungsgemäß hergestellten Materialien im Allgemeinen bei mehr als 700 nm, bevorzugter mehr als 800 nm, noch bevorzugter bei mehr als 900 nm und üblicherweise oberhalb von 1 $\mu$m (1000 nm),

Wenn die erfindungsgemäßen Materialien insbesondere durch das Vorliegen von Sulfonsäuregruppen schwefelhaltig sind, ist es bevorzugt, dass das Protonenleitfähigkeit verleihende Material einen Schwefelgehalt von im Allgemeinen 0,5 bis 50 Gew.-%, vorzugsweise 1 bis 40 Gew,-%, insbesondere 2 bis 30 Gew,-%, bezogen auf das Gesamtgewicht des besagten Materials, aufweist.

Wenn die erfindungsgemäßen Materialien insbesondere durch das Vorliegen von Phosphor-enthaltenden sauren Gruppen, Phosphonat- oder Phosphatgruppen phosphorhaltig sind, ist es bevorzugt, dass das Protonenleitfähigkeit verleihende Material einen Phosphorgehalt von im Allgemeinen 0,5 bis 50 Gew,-%, vorzugsweise 1 bis 40 Gew.-%, insbesondere 2 bis 30 Gew,-%, aufweist.

Wenn die erfindungsgemäßen Materialien insbesondere durch das Vorliegen von Aminogruppen, wie $-NR_2$, wie oben definiert, stickstoffhaltig sind, ist es bevorzugt, dass das Protonenleitfähigkeit verleihende Material einen Stickstoffgehalt von im Allgemeinen 0,25 bis 30 Gew.-%, vorzugsweise 0,6 bis 20 Gew.-%, insbesondere 1,0 bis 16 Gew.-%, bezogen auf das Gesamtgewicht des besagten Materials, aufweist.

Der Schwefelgehalt, Phosphorgehalt und der Stickstoffgehalt der erfindungsgemäßen Materialien korreliert dabei mit der Anteil an schwefel-, phosphor- bzw, stickstoffhaltigen Monomeren in den Polymeren.

In einer bevorzugten Ausführungsform der Erfindung beträgt der Stickstoffgehalt des erfindungsgemäß verwendeten polymeren Materials 0,50 bis 50 Gew-% bezogen auf das Gesamtgewicht des besagten Materials.

Das erfindungsgemäße Protonenleitfähigkeit verleihende Material ist darüber hinaus dadurch vorzugsweise gekennzeichnet, dass es in einer thermogravimetrisch Analyse bei einer Heizrate von 10 °C/min unter einer Stickstoffatmosphäre einen relativen Gewichtsverlust von im Allgemeinen mehr als 50 Gew.-%, vorzugsweise mehr als 60 Gew.-%, bis 430 °C zeigt. Weiterhin ist zu sehen, dass das erfindungsgemäße Material im geplanten Einsatztemperaturbereich thermisch stabil ist.

Die thermogravimetrische Analyse zeigt die Masseänderung einer Probe in Abhängigkeit von der Temperatur und der Zeit. Die Probe befindet sich dabei in einem feuerfesten Tiegel, der in einem Ofen auf Temperaturen von bis zu 600 °C erhitzt werden kann, Der Probenhalter ist mit einer Mikrowaage gekoppelt, so dass Gewichtsänderungen während des Aufheizvorgangs gemessen werden können. Die erfindungsgemäß angegebene thermogravimetrische Analyse wurde in einem Temperaturbereich von 30 °C bis 600 °C mit einer Heizrate von 10 °C/min unter einer Stickstoffatmosphäre durchgeführt.

Darüber hinaus weist das erfindungsgemäße Protonenleitfähigkeit verleihende Material vorzugsweise ein durch oszillierende Messung bestimmtes Speichermodul G' von im Allgemeinen 100 bis 10000 mPa, vorzugsweise 300 bis 6000 mPa, besonders bevorzugt 600 bis 4000 mPa, auf, wobei besagtes Speichermodul wie im Folgenden beschrieben bestimmt wird.

Im Rahmen der vorliegenden Erfindung erfolgt die Bestimmung des Speichermoduls G' durch oszillierende Messung bei 30 °C an in N,N-Dimethylacetamid / PBI (Poly-[2,2'-(m-phenylen)-5,5'-dibenzimidazol]) dispergierten Materialien im Gewichts-Verhältnis von 85,67/14,3/1,43 (N,N-Dimethylacetamid / PBI / Protonenleitfähigkeit verleihendes Material). Hierbei werden die rheologischen Untersuchungen am Rheometer MCR 301 der Firma Anton Paar Germany GmbH durchgeführt.

Es wurde ein Programm benutzt, das die folgenden Abschnitte enthält:

Abschnitt 1 : y = 0,1 %, f = 1 Hz, T = 30 °C, 10 Messpunkte, automatische Messpunktdauer zur Bestimmung des Speichermoduls.

Abschnitt 2: $\dot{\gamma}$ = 0, s$^{-1}$, T = 30 °C, 10 Messpunkte, Messpunktdauer 5 s zur Bestimmung der dynamischen Viskosität $\eta$ bei einem Schergefälle $\dot{\gamma}$ = 0,1 s$^{-1}$.

Abschnitt 3: $\dot{\gamma}$ = 0,1 100 s$^{-1}$ linear, T = 30 °C, 10 Messpunkte, Messpunktdauer 2 s zur Bestimmung der dynamischen Viskosität $\eta$ bei einem Schergefälle $\dot{\gamma}$ = 100 s$^{-1}$.

Abschnitt 4: $\dot{\gamma}$ = 100 s$^{-1}$, T = 30 °C, 5 Messpunkte, Messpunktdauer 5 s

Gemessen wurde mit dem Messkegel CP50-1 (SN9672) bei einer Spalthöhe von 0,05 mm.

In einer weiteren Ausführungsform der vorliegenden Erfindung weist das Protonenleitfähigkeit verleihende Material in N,N-Dimethylacetamid / PBI (Poly-[2,2'-(m-phenylen)-5,5'-dibenzimidazol]) dispergiert im Gewichts-Verhältnis 85,67/1 4,3/1 ,43 (N,N-Dimethylacetamid / PBI / Protonenleitfähigkeit verleihendes Material) eine durch rotierende Messung bestimmte Viskosität $\eta$ (0,1 s$^{-1}$) von im Allgemeinen 1000 bis 10000 mPa · s, vorzugsweise 2000 bis 9000 mPa · s, besonders bevorzugt 3500 bis 7500 mPa · s bei einer Temperatur von 30°C auf.

In einer weiteren Ausführungsform der vorliegenden Erfindung weist das Protonenleitfähigkeit verleihende Material in N,N-Dimethylacetamid / PBI (Poly-[2,2'-(m-phenylen)-5,5'-dibenzimidazol]) dispergiert im Gewichts-Verhältnis 85,67/14,3/1,43 (N,N-Dimethylacetamid / PBI / Protonenleitfähigkeit verleihendes Material) eine durch rotierende Messung bestimmte Viskosität $\eta$ (100 s$^{-1}$) von im Allgemeinen 2000 bis 8000 mPa · s, vorzugsweise 3000 bis 6500 mPa · s, besonders bevorzugt 3500 bis 5500 mPa · s bei einer Temperatur von 30°C auf.

Darüber hinaus sind die erfindungsgemäßen Protonenleitfähigkeit verleihenden Materialien besonders bevorzugt dadurch gekennzeichnet, dass das Material einen Scherkoeffizienten $\eta$ (0,1 s$^{-1}$) / $\eta$ (100 s$^{-1}$) (bestimmt, wie zuvor erwähnt in N,N-Dimethylacetamid / PBI (Poly-[2,2'-(m-phenylen)-5,5'-dibenzimidazol]) (dispergiert im Gewichts-Verhältnis 85,67/14,3/1,43 (N,N-Dimethylacetamid / PBI / Protonenleitfähigkeit verleihendes Material)) bei einer Temperatur von 30°C von im Allgemeinen 1 bis 5, vorzugsweise 1 bis 3, besonders bevorzugt 1 bis 1,8, aufweist. Aus diesen Messergebnissen (Scherkoeffizienten) wird überraschenderweise ein fast Newtonsches Fließverhalten deutlich. Dies belegt eine hohe Verträglichkeit der Partikel mit einer DMAc-PBI-Mischung. Dies belegt eine hohe Verträglichkeit der erfindungsgemäßen Partikel mit der DMAc-PBI-Mischung.

Die erfindungsgemäß vorgesehenen Protonenleitfähigkeit verleihenden Materialien sind vorzugsweise durch radikalische Polymerisation in Masse oder durch eine Polymerisation in Lösung erhältlich.

In einer bevorzugten Ausführungsform wird das protonenleitfähigkeitverleihende polymere Materials durch ein Verfahren hergestellt, bei dem Monomere, welche mindestens ein Monomer umfassen, die Protonenleitfähigkeit-verleihende funktionelle Gruppen aufweisen, in Masse oder in Lösung polymerisiert werden und gegebenenfalls das erhaltene polymere Material nach der Polymerisation einem Zerkleinerungsprozess unterworfen wird.

Bei der radikalischen Polymerisation in Masse wird das unverdünnte Monomer thermisch, photochemisch oder nach Zusatz von Radikalbildnern bzw. Initiatoren polymerisiert, bevorzugt erfolgt erfindungsgemäß der Zusatz von Radikalbildnern wie zuvor beschrieben. Die Mengen des Radikalbildners beträgt beispielsweise 0,01 bis 10, insbesondere bei 0,1 bis 4 Gew,-%, bezogen auf das Gesamtgewicht der Monomere. Die Polymerisation wird zumeist in flüssigem Zustand oder in der Gasphase durchgeführt. So entstehen bei der Substanzpolymerisation bei Einsatz entsprechend reiner Rohstoffe Polymerisate hoher Reinheit, jedoch ist die Reaktion aufgrund der freiwerdenden Reaktionswärme, die hohe Viskosität des Polymerisates und seiner schlechten Wärmeleitfähigkeit gegebenenfalls schwieriger zu handhaben.

Die Lösungspolymerisation bietet eine bessere Kontrolle der Wärmeabfuhr als die Substanzpolymerisation, Hier werden die Monomere in einem inerten Lösungsmittel polymerisiert. Das Lösemittel kann so gewählt werden, dass es bei der gewünschten Polymerisationstemperatur siedet. So wird die freiwerdende Polymerisationswärme durch die Verdampfungswärme des Lösemittels kompensiert. Auch die Viskosität kann so gewählt werden, dass die Polymerisatlösung bei vollständigem Umsatz noch zu rühren ist.

Geeignete Lösungsmittel für die Lösungspolymerisation hängen von der Art der umgesetzten Monomere ab und werden beispielsweise ausgewählt aus Wasser und/oder organischen Lösungsmitteln, Vorzugsweise weisen die Lösungsmittel einen Siedebereich von 50 bis 150°C, vorzugsweise von 60 bis 120°C auf. Als Lösungsmittel kommen insbesondere Alkohole, wie Methanol, Ethanol, n- und iso-Propanol, n- und iso-Butanol, vorzugsweise Isopropanol und/oder Isobutanol sowie Kohlenwasserstoffe wie Toluol und insbesondere Benzine eines Siedebereichs von 60 bis 120°C in Frage, Ferner können Ketone, wie Aceton, Methylethylketon, Methylisobutylketon, Dimethylformamid (DMF), Dimethylacetamid (DMAc), N-Methylpyrolidon (NNP), Dimethylsulfoxid (DMSO) und Ester, beispielsweise Essigsäureethylester sowie Mischungen davon verwendet werden. Das Polymer kann bei der Polymerisation ausfallen oder in Lösung bleiben, Im Anschluss an die Polymerisation erfolgt erfindungsgemäß bevorzugt die Abtrennung des Lösungsmittels.

Nachdem das Protonenleitfähigkeit verleihende Material vorzugsweise durch eine Polymerisation in Masse oder durch eine Polymerisation in Lösung hergestellt wurde, wird das erhaltene polymere Material bevorzugt einem Zerkleinerungsprozess unterworfen.

Die Art und Weise des Zerkleinerungsprozesses unterliegt in der vorliegenden Erfindung keiner besonderen Beschränkung und erfolgt vorzugsweise durch Mahlen, mittels einer Mühle, einer Perlmühle, einer Dreiwalze, einem Dissolver, einem Vakuumdissolver, einem Ultraturrax, einem Homogenisator und/oder einem Hochdruckhomogenisator.

Insbesondere ist es erfindungsgemäß bevorzugt, dass das vorzugsweise durch Polymerisation in Masse oder durch eine Polymerisation in Lösung hergestellte Protonenleitfähigkeit verleihende Material einem mindestens zweistufigen Zerkleinerungsprozess unterworfen wird,

Bevorzugt erfolgt die Zerkleinerung erfindungsgemäß beispielsweise wahlweise in einem ersten Zerkleinerungsschritt in einer Mühle, worin das erhaltene Material bevorzugt in Masse zerkleinert wird; anschließend erfolgt eine weitere Zerkleinerung in einem zweiten Zerkleinerungsschritt in einem Dispergiermittel, wie insbesondere einem organischen Lösungsmittel beispielsweise mit einen Dissolver, einem Vakuumdissolver oder einem Ultraturrax, und in einem dritten Zerkleinerungsschritt wird eine Dispersion des erfindungsgemäßen Materials in einem Dispergiermittel der Behandlung mit einem Hochdruckhomogenisator, einer Perlmühle oder einer Dreiwalze, besonders bevorzugt einem Hochdruckhomogenisator unterworfen, der beispielsweise bei Drücken von mehr als 100, bevorzugt mehr als 500, bevorzugter mehr als 800 bar arbeitet. (Der genannte Homogenisator arbeitet bei niedrigeren Drücken als der Hochdruckhomogenisator, insbesondere bei weniger als 100 bar).

Die Mahlung (Zerkleinerung) der erfindungsgemäßen Protonenleitfähigkeit verleihenden Materialien kann auch mit einem Rotor und anschließend mit einem Homogenisator mehrfach bei leichtem Unterdruck in Wasser oder in organischen Medien wie beispielsweise N,N-Dimethylacetamid durchgeführt werden.

In einer bevorzugten Ausführungsform werden bei der Zerkleinerung ein oder mehrere geeignete Siebe zur Isolierung von Material verwendet, welches die gewünschten mittleren Teilchengrößen aufweist.

Um die gewünschte, zuvor definierte Teilchengröße zu erhalten, ist es erfindungsgemäß somit bevorzugt, dass bei der Zerkleinerung Siebe mit entsprechenden Siebgrößen zur Isolierung von Material verwendet wird, welches die angestrebte Größe aufweist.

Das Protonenleitfähigkeit verleihende Material wird bevorzugt durch ein Verfahren hergestellt, wobei das Material durch eine radikalische Polymerisation in Masse oder in Lösung der zuvor definierten Monomere und vorzugsweise anschließender Zerkleinerung erhalten wird. Es werden bevorzugt die zuvor definierten Vernetzer eingesetzt. Das erfindungsgemäße polymere Material wird bevorzugt gegebenenfalls nach erfolgter Entfernung des Lösungsmittels als trockenes, bevorzugt feinteiliges Pulver bereitgestellt. Es kann aber auch in Form von Dispersionen in Lösungsmitteln wie die oben genannten bereitgestellt werden.

In Polymermatrices, wie in der Form von Formkörpern, Membranen, Folien usw, können die erfindungsgemäß verwendeten Protonenleitfähigkeit verleihenden Materialien in einem Anteil von Matrixpolymer zu Polymerteilchen von 1 : 99 bis 99 : 1, bevorzugt von 10 : 90 bis 90 : 10, besonders bevorzugt 20 : 80 bis 80 : 20 enthalten sein, Die Menge der erfindungsgemäß verwendeten Polymerteilchen hängt von den gewünschten Eigenschaften der Formkörper, wie beispielsweise der Protonenleitfähigkeit der Membranen ab.

Geeignete Matrixpolymere sind beispielsweise thermoplastische Polymere wie Standard-Thermoplaste, sogenannte Techno-Thermoplaste und sogenannte Hochleistungs-Thermoplaste (vgl. H. G. Elias Makromoleküle Band 2, 5. Aufl., Hüthig & Wepf Verlag, 1991, Seiten 443 ff.) wie zum Beispiel Polypropylen; Polyethylen, wie HDPE, LDPE, LLDPE; Polystyrol etc. und polare thermoplastische Werkstoffe, wie PU, PC, EVM, PVA, PVAC, Polyvinylbutyral, PET, PBT, POM, PMMA, PVC, ABS, AES, SAN, PTFE, CTFE, PVF, PVDF, Polyvinylimidazol, Polyvinylpyridin, Polyimide, PA, wie insbesondere PA-6 (Nylon), bevorzugter PA-4, PA-66 (Perlon), PA-69, PA-610, PA-11, PA-12, PA 612, PA-MXD6 etc., insbesondere (Hüthig & Wepf Verlag, 1991, 431-433, 447) Polypropylen; Polyethylen, wie HDPE (Polyethylen hoher Dichte), LDPE (Polyethylen niederer Dichte), LLDPE (lineares Polyethylen niederer Dichte); Polystyrol etc. und polare thermoplastische Werkstoffe, wie Polyurethane (PU), Polycarbonate (PC), Polyethylenterephthalat (PET), Polybutylenterephthalat (PBT) oder auch Thermoplastische Elastomere, wie z.B. auf Basis Polyamide (TPE-A), Thermoplastische Polyurethan Elastomere (TPE-U), Ethylen-Vinylacetat-Copolymere (EVM), Polyvinylacetate (PVA/ PVAC) Polyvinylbutyral, Poly-ethylenterephthalat (PET), Polybutylentelephthalat (PBT), Polyoxymethylen (POM), Polymethylmethacrylat (PMMA), Polyvinylchlorid (PVC), Acrylnitril-Butadien-Styrol-(ABS), Polymerisat von Styrol+Acrylnitril in Gegenwart von EPDM-Elastomeren (AES), Styrol-Acrilnitril (SAN), Polytetrafluorethylen (PTFE), Poly(chlortrifluorethylen) (CTFE), Polyvinylfluorid (PVF), Polyvinylidenfluorid (PVDF), Polyvinylimidazol, Polyvinylpyridin, Polyimide, Polyamide (PA), wie insbesondere PA-6 (Nylon), bevorzugter PA-4, PA-66 (Perlon), PA-69, PA-610, PA-11, PA-12, PA 612, PA-MXD6 etc.

Das Gewichtsverhältnis dieser Matrixpolymere zu den erfindungsgemäßen Protonenleitföhigkeit-verleihenden Materialien kann zweckmäßig von 1 : 99 bis 99 : 1, bevorzugt von 10 : 90 bis 90 : 10, besonders bevorzugt 20 : 80 bis 80 : 20 betragen. Bevorzugtes Matrixpolymer für die Anwendung in Polyelektrolytmembranen, insbesondere für Brennstoffzellen ist Polybenzimidazol (z.B. US 4460763) und alkylierte Polybenzimidazole.

Das erfindungsgemäß verwendete polymere Material wird bevorzugt als Additiv für eine Brennstoffzellen-Membran, insbesondere auf Polybenzimidazol (PBI)-Basis verwendet wird.

Das erfindungsgemäß verwendete polymere Material wird weiterhin bevorzugt als Additiv für die Herstellung einer Elektrode einer Brennstoffzelle verwendet.

Das erfindungsgemäß verwendete polymere Material wird weiterhin bevorzugt als Additiv für die Herstellung einer Gasdiffusionselektrode einer Brennstoffzelle, insbesondere in einer Katalysatorschicht einer Gasdiffusionselektrode, verwendet.

Die erfindungsgemäßen Protonenleitfähigkeit verleihenden Materialien können insbesondere als Additiv in Brennstoffzellmembranen verwendet werden. Im Gegensatz zu dem dort häufig verwendeten Polybenzimidazol weist das erfindungsgemäße Material flexible Polymerketten mit einem nicht zu hohen Vernetzungsgrad auf. Protonierte, basische Zentren am erfindungsgemäßen Material und am Polybenzimidazol stoßen sich aufgrund gleichartiger Ladung ab und führen so zu einem Strecken der Polymerketten. Damit können sie Wasser und Phosphorsäure durch Solvatisierung binden. Darüber hinaus führen die erfindungsgemäßen Materialien in den Membranen zu einer Art Dochtwirkung, welche die Flüssigkeit, also beispielsweise Phosphorsäure, in den Absorber hineinleitet. Solch eine Dochtwirkung ist ähnlich der Kapillarkraft dann am Größten, wenn das zu quellende Material eine hohe Affinität zur Quellflüssigkeit aufweist, also von ihr gut benetzt werden kann.

Die Diffusion von beispielsweise Wasser oder allgemeiner von Diffusionsmitteln in das Polymer kommt dann zum Erliegen, wenn die thermodynamische Kraft, die aus dem Konzentrationsgradienten bzw. dem Potentialgradienten zwischen dem Wasser im Polymer und außerhalb resultiert, genauso groß ist wie die Kraft, mit der die Polymerketten von der gestreckten, geordneten Anordnung wieder in eine ungeordnete, verknäulte Anordnung zurückstreben. Ein wichtiger Mechanismus, der zur Streckung der Polymere und so zu Erhöhung des Volumens beiträgt, resultiert aus der Natur der ionischen funktionellen Gruppen, welche das erfindungsgemäße Material vorzugsweise aufweist. Die Ionen, beispielsweise negativ geladene Carboxylate, Sulfonatgruppen oder positiv geladene quaternäre Ammoniumgruppen, die an die Polymerketten gebunden sind, stoßen sich aufgrund der Coulomb'schen Wechselwirkung gegenseitig ab und tragen so zur Streckung der Polymerketten bei. Die gestreckten Polymerketten haben wiederum ein größeres Solvatvolumen. Auch muss aufgrund der Ladungsneutralität für jedes an die Polymerkette gebundene Ion ein Gegenion vorhanden sein, welches auch wieder stark solvatisiert ist.

Des weiteren betrifft die vorliegende Erfindung die Verwendung der protonenleitfähigkeitverleihenden polymeren Materialien zur Herstellung von Gasdiffusionselektroden für Polymerelektrolyt-Brennstoffzellen mit einer Arbeitstemperatur bis 250 °C mit mehreren gasdurchlässigen, elektrisch leitfähigen Schichten, die mindestens eine Gasdiffusionsschicht und eine Katalysatorschicht umfassen, wobei die Katalysatorschicht die genannten protonenleitfähigkeitverleihenden polymeren Materialien enthält. Die Katalysatorschicht enthält dabei ein elektrisch leitfähiges Trägermaterial und einen Elektrokatalysator. Das elektrisch leitfähige Trägermaterial der Katalysatorschicht ist bevorzugt aus der Gruppe der Metalle, Metalloxide, Metallcarbide, Kohlenstoffe, wie Ruß, oder Gemischen daraus ausgewählt. Der Elektrokatalysator ist bevorzugt aus der Gruppe von Metallen und Metalllegierungen ausgewählt, wie Metalle aus der 6. und/oder 8. Nebengruppe im Periodensystem der Elemente, insbesondere Platin und/oder Ruthenium. Die Gasdiffusionsschicht ist bevorzugt aus Kohlenstoff und weist bevorzugt die Form eines Papiers, Vlieses, Gitters, Gewirks und/oder Gewebes auf. Die Katalysatorschicht enthält bevorzugt von 0,2 bis 50 Gew.-%, besonders bevorzugt 0,5 bis 10 Gew.-%, des protonenleitfähigkeitverleihenden polymeren Materials, bezogen auf die Gesamtmasse des elektrisch leitfähige Trägermaterials und des Elektrokatalysators.

Die Erfindung betrifft weiterhin eine Brennstoffzelle, welche das vorstehend erwähnte protonenleitfähigkeitverleihende polymere Materials enthält.

Die Erfindung betrifft weiterhin insbesondere eine das vorstehend erwähnte protonenleitfähigkeitverleihende polymere Material enthaltende Polymerelektrolyt-Brennstoffzelle, insbesondere für den Betrieb bei Temperaturen bis 250 °C mit Gasdiffusionselektroden mit mehreren gasdurchlässigen, elektrisch leitfähigen Schichten, die mindestens eine Gasdiffusionsschicht und eine Katalysatorschicht umfassen, wobei die Katalysatorschicht das vorstehend erwähnte protonenleitfähigkeitverleihende polymere Materials enthält, oder eine in der Brennstoffzelle verwendete Membran, insbesondere eine PBI-Membran, enthält das protonenleitfähigkeitverleihende polymere Material. Weitere Membranmaterialien sind: Polybenzimidazol (PBI), Polypyridin, Polypyrimidin, Polyimidazol, Polybenzthiazol, Polybenzoxazol, Polyoxadiazol, Polychinoxalin, Polythiadiazol, Poly(tetrazapyren) oder eine Kombination von zwei oder mehreren davon, welche mit Dotierungsmittel versehen sein können, die aus der Gruppe, umfassend Phosphorsäure, Phosphorsäurederivate, Phosphonsäure, Phosphonsäurederivate, Schwefelsäure, Schwefelsdurederivate, Sulfonsäure, Sulfonsäurederivate oder eine Kombination von zwei oder mehreren davon, ausgewählt werden.

Die vorliegende Erfindung wird anhand der nachfolgenden Beispiele näher erläutert, welche die vorliegende Erfindung jedoch nicht beschränken.

Beispiele

1. Herstellung erfindungsgemäßer Materialien

Es werden erfindungsgemäße Protonenleitfähigkeit verleihende Materialien gemäß der Tabelle 1 hergestellt:

Tabelle 1 : Herstellung.

| Probe | Basen-modifizierung mit DMAPMA [phm*] | TMPTMA [phm] als Vernetzer |
|---|---|---|
| (2) DB 36 | 100 | 0 |
| (3) DB 43 | 96,25 | 3,75 |
| (4) DB 37 | 94 | 6 |
| (* phm = parts by weight per 100 parts by weight of monomer). | | |

Das Homopolymer der Probe (2) wurde wie folgt hergestellt:

40,00 g (0,235 mol) DMAPMA und 0,386 g (0,705 mmol; 0,3 mol-%) des Initiators Azobisisobutyronitrile (AIBN) werden in einem mit Stickstoff gespülten Dreihalskolben vorgelegt und unter Rühren langsam unter Stickstoff aufgeheizt. Bei 85 °C Badtemperatur beginnt sich das AIBN langsam unter Blasenbildung und Zersetzung aufzulösen. Die Viskosität nimmt im gleichen Zuge stark zu, so dass weiter aufgeheizt wird. Bei etwa 100 °C Badtemperatur wird das Material fest und wickelt sich teilweise um den Rührer. Bei einer Badtemperatur von 170 °C beginnt das Polymer aufzuschmelzen und der Rührer wird wieder frei. Die Reaktion wird für weitere drei Stunden bei 200 °C Badtemperatur unter Stickstoff in der Schmelze fortgeführt. Nach Beendigung der Reaktion wird das Polymer heiß in eine Kristallisationsschale gegossen und erstarrt. Nach dem Abkühlen wird das Material zunächst grob mechanisch zerkleinert und nachfolgend in einer Rotormühle ZM100 der Firma Retsch (0,5 mm-Sieb) gemahlen, mittels eines Dissolvers in Dimethylacetamid (DMAc) eingearbeitet und anschließend mit dem Homogenisator APV 1000 viermal bei 950 bar in DMAc dispergiert.

Das Copolymer der Probe (3) wurde wie folgt hergestellt:

Es werden 68,0 g (0,399 mol; 96,25 phm) DMAPMA, 1,28 g (0,0075 mol; 3,75 phm) TMPTMA und 0,210 g (1,28 mmol; 0,3 mol-%) AIBN vorgelegt und zur Reaktion gebracht, in dem die Mischung in einem Heizbad langsam unter einer Stickstoffatmosphäre auf eine Temperatur von 110 °C gebracht wird. Bei dieser Temperatur ist eine Reaktion des AIBN anhand einer Blasenbildung zu erkennen. Es bildet sich eine pulvrige Masse, die auch bei 200° C nicht aufschmilzt. Die Reaktionszeit bei 200 °C beträgt 5 Stunden. Nach Beendigung der Reaktion wird die Reaktionsmischung mit Methanol behandelt, um die nicht umgesetzten Monomere herauszuwaschen. Anschließend wird der Rückstand bei 50 °C im Vakuum für vier Stunden getrocknet. Die Ausbeute beträgt 86,2 %.

Das Copolymer der Probe (4) wurde wie folgt hergestellt:

Es werden 65,8 g (0,39 mol; 94 phm) DMAPMA, 4,2 g (0,012 mol; 6 phm) TMPTMA und 0,210 g (1,28 mmol; 0,3 mol-%) AIBN vorgelegt und zur Reaktion gebracht, in dem die Mischung in einem Heizbad langsam unter einer Stickstoffatmosphäre auf eine Temperatur von 110 °C gebracht wird. Bei dieser Temperatur ist eine Reaktion des AIBN anhand einer Blasenbildung zu erkennen. Es bildet sich eine pulvrige Masse, die auch bei 200° C nicht aufschmilzt. Die Reaktionszeit bei 200 °C beträgt 5 Stunden. Nach Beendigung der Reaktion wird die Reaktionsmischung mit Methanol behandelt, um die nicht umgesetzten Monomere herauszuwaschen. Anschließend wird der Rückstand bei 50 °C im Vakuum für vier Stunden getrocknet. Die Ausbeute beträgt 92,6 %.

2. Messmethoden-Lichtstreuung

Die Lichtstreuungsmessungen wurden mit Hilfe des Lichtstreumessgerätes Coulter LS 230 SVM (small volume modul) durchgeführt. Das LS 230 SVM verfügt über einen Messbereich von 0,04 $\mu$m bis 2000 $\mu$m in 160 logarithmisch geteilten Kornklassen, der durch die Reihenschaltung von zwei Messzellen zur Laserbeugungsmessung sowie PIDS-Messung realisiert wird. Es werden die Partikelgrößen einiger Polymere dispergiert in N,N-Dimethylacetamid / PBI (Poly-[2,2'-(m-phenylen)-5,5'-dibenzimidazol]) im Gewichts-Verhältnis 85,67/14,3/1,43 (N,N-Dimethylacetamid / PBI / Protonenleitfähigkeit verleihendes Material) untersucht und verglichen.

Aus den Lichtstreuungsmessungen (Gewichtsverteilung) werden folgende Parameter ausgewählt:

Modalität:    Anzahl der Maxima der Partikelgrößenverteilung (M = monomodal, B = bimodal, T = trimodal, Mult = Multimodal)

$d_{mittel}$:    Mittelwert der Partikelgrößenverteilung (mittlerer Partikeldurchmesser, arithmetisches Mittel)

$d_{max}$:    Partikeldurchmesser am Maximum der Partikelgrößenverteilung (häufigster Partikeldurchmesser)

$d_{10}$    Partikeldurchmesser bei 10 Gew.-% der Partikelgrößenverteilung

$d_{50}$:    Partikeldurchmesser bei 50 Gew.-% der Partikelgrößenverteilung (median)

$d_{90}$:    Partikeldurchmesser bei Gew.-90 % der Partikelgrößenverteilung

In Tabelle 2 sind die Ergebnisse aus den Lichtstreumessungen an Partikeln dispergiert in N,N-Dimethylacetamid / PBI (Poly-[2,2'-(m-phenylen)-5,5'-dibenzimidazol]) dargestellt. In Tabelle 3 sind die Gelgehalte und Quellungsindices der untersuchten Materialien, bestimmt in Toluol sowie die rheologischen Testergebnisse aufgeführt.

Tabelle 2: Lichtstreumessungen

| Probe | Durchmesser DMAc/PBI | | | | | |
|-------|------------|-----------|-----------|-----------|-----------|-----------|
|       | Modalität  | $d_{mittel}$ | $d_{max}$ | $d_{10}$ | $d_{50}$ | $d_{90}$ |
|       |            | [$\mu$m]  | [$\mu$m]  | [$\mu$m]  | [$\mu$m]  | [$\mu$m]  |
| DB 36 | mult       | 2,5       | 18,9      | 1,9       | 2,7       | 5,0       |
| DB 43 | mult       | 2,7       | 17,2      | 1,9       | 3,8       | 5,3       |
| DB 37 | M          | 5,6       | 30,1      | 2,6       | 5,5       | 12,4      |

Erläuterung:

mult, bedeutet multimodal und M bedeutet monomodal. Gemeint ist jeweils die Kurvenform bei der grafischen Auswertung der Lichtstreumessung über einen größeren Partikeldurchmesserbereich (Messbereich von 0,04 $\mu$m bis 2000 $\mu$m).

Tabelle 3: Gelgehalte und Quellungsindices der untersuchten Materialien, bestimmt in Toluol, sowie die rheologische Messungen bei 30°C an den in DMAc/PBI dispergierten Materialien (DMAc:PBI:Polymer= 85,67:14,3:1,43)

| DB | Monomere | | Initiator | | | | | |
|---|---|---|---|---|---|---|---|---|
| | DMAPMA | TMPTMA | AIBN | G' | $\eta$ (0,1 s-1) | Ausbeute | Gelgehalt | Quellungsindex Qi |
| | [phm] | [phm] | [mol-%] | [mPa] | [mPas] | [%] | [%] | |
| 36 | 100 | 0 | 0,34 | 651 | 4030 | 94,5 | 0 | n. b. |
| 43 | 96,25 | 3,75 | 0,34 | 994 | 4650 | 86,2 | 65,30 | 6,3 |
| 37 | 94 | 6 | 0,33 | 3044 | 6100 | 92,6 | 79,55 | 4,1 |

Der Gelgehalt wurde durch kontinuierliche Extraktion mit Toluol bestimmt. Hierzu wurde eine Probenmenge von etwa 3 g in einen Soxhlet-Extraktionsapparatur eingewogen und 16 Stunden im Lösungsmittelrückfluss extrahiert.

Als Ergebnisgröße wurde durch Differenzwägung der Extraktgehalt bestimmt.

Zur Ermittlung des Quellungsindexes wurde eine Polymerprobe von ca. 250 mg im etwa 1000-fachen Gewichts-Überschuss an Toluol 24 Stunden lang gequollen, anschließend mit einem Faltenfilter abfiltriert, gewogen und unter Vakuum bei 70 °C bis zur Gewichtskonstanz getrocknet und erneut gewogen. Die Differenz der Wägungen ergibt den Quellungsindex gemäß

$$Q_i = \frac{Na\beta gewicht}{Trockengewicht}$$

Zur Überprüfung der Kompabilität wurden die Proben 36, 37 und 43 mit Dimethylacetamid versetzt, mit dem Hochdruckhomogenisator dispergiert und anschließend mit einer Polybenzimidazol (PBI) /Dimethylacetamid-Lösung versetzt und gerührt. Anschließend wurde mittels eines 200 mm 4-Kant-Rakels ein Film gezogen. Nach der Trocknung hatte dieser eine Dicke von 40 $\mu$m.

Diese Filme waren transparent und zeigten keinerlei Trübung, was die gute Kompabilität unter Beweis stellt.

Für die nachfolgenden Beispiele wurden die Membranen durch ein Verdunstungsverfahren wie folgt hergestellt:

Zur Herstellung einer Gießlösung wurden die Proben 36, 37 oder 43 sowie 595-7 mit Dimethylacetamid versetzt, die Proben 36, 37 oder 43 enthaltenden Dimetylocetamid-Dispersionen mit dem Hochdruckhomogenisator dispergiert und anschließend mit einer Polybenzimidazol (PBI) /Dimethylacetamid-Lösung versetzt und gerührt. Diese Gießlösung wurde anschließend auf eine Trägerfolie aufgerakelt und durch Verdampfung des Lösungsmittels unter Stickstoffatmosphäre eine Membran hergestellt.

Als Trägerfolie für die Gießlösung wurde eine Polyesterfolie eingesetzt. Die hierfür eingesetzte Maschine bestand aus einem Abwicklungsteil, einem Rakel-Auftragswerk, einem Schwebetrockner und einem Aufwicklungsteil. Die Gießlösung wurde in das Auftragswerk gefüllt und mit einer Spalthöhe von 250 $\mu$m und einer Rakelbreite von 28 cm auf die Trägerfolie aufgetragen. Die Ziehgeschwindigkeit bei der Membranherstellung betrug 0,2 m/min. Nach Durchlaufen des inertisierten Trockners (02-Gehalt = 6,0 %) und einer Trockenwalze mit einer Temperatur von 190 °C konnte die Membran mit einer Schichtdicke von 30 $\mu$m - 50 $\mu$m auf der Polyesterfolie aufgewickelt werden.

Für die Dotierung wurde ein Membranstück in der Größe von 136,5 mm x 118,5 mm ausgestanzt und das Gewicht bestimmt. Die Probe wurde zwischen Teflonnetze in einer Petrischale (d = 20 cm) mit ca. 70 ml konzentrierter Phosphorsäure (85%) versetzt. Die Probe wurde 30 Minuten bei 130 °C in einen Umluftofen gestellt, danach aus der Säure genommen, mit einem Papiertuch trocken gewischt und das Gewicht bestimmt.

Die nachstehende Tabelle 4 zeigt die Ergebnisse der Membranprüfungen

Tabelle 4:

| DB | Zusammensetzung Additiv | Quellung in 85% $H_3PO_4$ [Quelldrucl<] | Extraktionsrückstand [%] | $\sigma_{max}$ [N/mm$^2$], ($\varepsilon_{\sigma max}$ = Dehnung), undotiert/dotiert (% $H_3PO_4$) | $\sigma$ (25°C) [S/m] |
|---|---|---|---|---|---|
| 595-7 -- - | PBI (100%) | 640 bar | 17 | undot: 134, (5 %) dot: 84 %: 6,2, (59%) | 3,3 |
| 10 % DB36 90% PBI | DMAPMA: 100 TMPTMA:0 | 600 bar | 82 | undot: 127, (6%) dot: 88 %: 5,6, (65%) | 5,4 |
| 10 % DB43 90% PBI | DMAPMA: 96,25 TMPTMA: 3,75 | 560 bar | 68 | undot: 143, (5 %) dot: 85%: 7,5, (82%) | 4,8 |
| 10% DB37 90% PBI | DMAPMA: 94 TMPTMA: 6 | 520 bar | 63 | undot: 132, (5 %) 82 %: 8,1, (88%) | 5,0 |
| Mit $\sigma$ *max* = Bruchspannung | | | | | |

Die Zugspannungsmessungen wurden am Zugspannungsmessgerät Zwick I der Firma Zwick GmbH & Co.KG durchgeführt. Für trockene, undotierte Membranen wurde ein 200 N-Messkopf verwendet. Es wurden für jede Membran je zwei Membranstücke längs und quer und ein Stück schräg zur Richtung der Maschinenziehung mit den Maßen 20 mm x 150 mm ausgestanzt. Von den fünf Stücken wurde jeweils die Dicke gemessen. Anschließend wurden die Proben eingespannt und die Messung gestartet. Es wurden die maximale Zugspannung $\sigma$max (Bruchspannung), die Dehnung am Maximum $\varepsilon\sigma$max (Bruchdehnung) bestimmt. Folgende Messparameter wurden eingestellt: Vorkraft F = 0,5 N, Ziehgeschwindigkeit u = 5 mm / min, Messstrecke = 100 mm.

Die Leitfähigkeitsmessungen $\sigma$ wurden an mit Phosphorsäure dotierten Membranen mit einer Vierkontakt-Leitfähigkeitsmesszelle mittels Impedanzspektroskopie bestimmt und mit dem Computerprogramm Thales ausgewertet. Hierfür wurde jeweils ein mit Phosphorsäure dotiertes Membranstück der Größe 2 cm x 4,5 cm ausgestanzt und die Dicke bestimmt. Das Membranstück wurde in eine vorgenannte Leitfähigkeitszelle eingebaut. Für Messungen bei 160 °C wurde die Leitfähigkeitszelle mit einer Heizplatte aufgeheizt.

Es wurde ein Spektrum von 1 MHz bis 1 Hz aufgenommen. Bei 10 Hz betrug die Phasenverschiebung 0° und die Impedanz bei 10 Hz wurde als Widerstand abgelesen.

Der Quelldruck für den Quellungsprozess mit Phosphorsäure wurde berechnet aus der relativen Dickenzunahme, der relativen Flächenzunahme. Unter Berücksichtigung der Dimensionsänderung bei einer bestimmten Phosphorsäureaufnahme ergibt sich die nachfolgende Formel als Berechnungsgrundlage:

$$Q = \frac{k}{[(2Q_F + Q_D)/300]^{2.327}} [bar]$$

Hierin ist $Q_F$ die Dimensionsänderung der Fläche, $Q_D$ die Dickeänderung nach der vorstehenden Gleichung und k eine Konstante (679 bar). Der Quelldruck beschreibt den Druck, den das Polymernetzwerk einer Quellung entgegensetzt. Gut quellbare Polymere besitzen also einen niedrigen Quelldruck, schlecht quellbare Polymere einen hohen Quelldruck. Der Quelldruck, der die Dehnung des polymeren Netzwerkes wieder spiegelt, ist bei den erfindungsgemäßen Materialien deutlich erniedrigt. Dies bedeutet, dass die erfindungsgemäßen Materialien die Phosphorsäureaufnahme der Membran begünstigen.

Die Extraktionsrückstände sind bei den erfindungsgemäßen Materialien deutlich erhöht, was zu deutlich widerstandfähigeren Membranen führt. Die zugesetzten Materialien wirken somit wie Vernetzer.

Mit zunehmendem Vernetzergehalt in den hergestellten Materialien fällt bei 10 prozentiger Dosierung in der Membran der Quelldruck ab, d. h. die Quellung durch Phosphorsäure nimmt zu, Bruchspannung und Bruchdehnung der dotierten Membran nehmen zu, d. h. die Mechanik, Widerstandsfähigkeit gegen Extraktion, Quellung der dotierten Membran konnte durch Zusatz der erfindungsgemäßen Materialien deutlich gesteigert werden.

Aus den hohen Leitfähigkeitswerten $\sigma$ bei den Leitfähigkeitsmessungen wird die Eignung als Membranmaterial eindrucksvoll belegt.

REM-Aufnahmen von den Proben zeigen, dass die erfindungsgemäßen Materialien höchste Kompatibilität zum PBI aufweisen. Tabelle 5 zeigt die Übersicht der Ergebnisse.

Tabelle 5.: Ergebnisse der REM-Untersuchungen an den Membranen.

| DB | Zusammensetzung | Stickstoffgehalt | Aussehen | Struktur |
|---|---|---|---|---|
| | | [%] | | |
| 595-7 --- | reine PBI-Membran | n. b. | klar und transparent | homogen |
| 614-6 10 % DB36 | 100 DMAPMA | 14,38 | klar und transparent | homogen |
| 614-7 10 % DB37 | 94 DMAPMA, 6 TMPTMA | 14,36 | klar und transparent | homogen |
| 614-8 10 % DB43 | 96,25 DMAPMA, 3,75 TMPTMA | 15,06 | klar und transparent | homogen |

Somit lassen sich die die erfindungsgemäßen Materialien enthaltenden Membrane als REM-Typ P , d.h. als homogen klassifizieren.

**Patentansprüche**

1. Verwendung von protonenleitfähigkeitverleihenden polymeren Materialien, welche unter Anwesenheit von sauren und/oder basischen funktionellen Gruppen aus Monomereinheiten aufgebaut sind und durch einen Zerkleinerungsprozess eine unregelmäßige Form mit Ecken bzw. Kanten aufweisen, als Additiv für mit Phosphorsäure dotierte Membranen auf PBI-Basis und/oder als Additiv für Elektroden und/oder als Additiv für Gasdiffusionselektroden bei der Herstellung von Phosphorsäurebrennstoffzellen.

2. Verwendung nach Anspruch 1, worin das polymere Material durch mindestens eine der folgenden Maßnahmen vernetzt wurde:

   a) durch Copolymerisation mit vernetzend wirkenden multifunktionellen Verbindungen (Vernetzer),
   b) durch nachträgliche Vernetzung nach der Polymerisation mittels Vernetzungsmitteln oder durch energiereiche Strahlung,
   c) durch Fortführung der Polymerisation bis zu hohen Umsätzen,
   d) im Monomerzulaufverfahren durch Polymerisation mit hohen internen Umsätzen.

3. Verwendung nach einem der Ansprüche 1 bis 2, **dadurch gekennzeichnet, dass** das polymere Material Monomereinheiten mindestens auf Basis einer Verbindung umfasst, welche ausgewählt ist aus der Gruppe, bestehend aus Styrol, Ethylenglycolmethacrylatphosphat (MAEP), Vinylsulfonsäure (VSS), Styrolsulfonsäure (SSS), vinylphosphonsäure (VPS), N-Vinylimidazol (VID), 4-Vinylpyridin (VP), N-[3-(Dimethylamino)propyl]methacrylamid (DMAPMA), Diethylaminoethylmethacrylat (DMAEMA), Acrylamid, 2-Acrylamidoglykolsäure, 2-Acrylamido-2-methyl-1-propansulfonsäure, Acrylsäure-[2-(((Butylamino)-carbonyl)-oxy)ethylester], Acrylsäure-(2-diethylaminoethylester), Acrylsäure-(2-(dimethylamino)-ethylester), Acrylsäure-(3-(dimethylamino)-propylester), Acrylsäure-isopropylamid, Acrylsäurephenylamid, Acrylsäure-(3-sulfopropylester)-Kaliumsalz, Methacrylsäureamid, Methacrylsäure-2-aminoethylesterhydrochlorid, Methacrylsäure-(2-(tert.-butylamino)-ethylester), Methacrylsäure-((2-dimethylamino)-methylester), Methacrylsäure-(3-dimethylaminopropylamid), Methacrylsäureisopropylamid, Methacrylsäure-(3-sulfopropylester)-Kaliumsalz, 3-Vinylanilin, 4-Vinylanilin, N-Vinylcaprolactam, N-Vinylformamid, 1-Vinylimidazol, 2-Vinylpyridin, 4-Vinyl-pyridin, 1-Vinyl-2-pyrrolidon, 5-vinyluracil, Methacrylsäureglycidylester (GDMA), Mischungen der zuvor genannten Verbindungen, Salze der zuvor genannten Verbindungen und die konjugierten Säuren oder Basen der zuvor genannten Verbindungen.

4. Verwendung nach einem der Ansprüche 1 bis 3, **dadurch gekennzeichnet, dass** das polymere Material aus monofunktionellen Monomereinheiten, die durch basische und/oder sauere Gruppen modifiziert sind, und gegebenenfalls polyfunktionellen Monomereinheiten (Vernetzer) besteht.

**5.** Verwendung nach einem der Ansprüche 1 bis 4, **dadurch gekennzeichnet, dass** das polymere Material mit einem Vernetzer vernetzt ist, der ausgewählt wird aus der Gruppe, bestehend aus: Multifunktionellen Monomeren mit mindestens zwei, vorzugsweise 2 bis 4 copolymerisierbaren C=C-Doppelbindungen, Diisopropenylbenzol, Divinylbenzol, Trivinylbenzol, Divinylether, Divinylsulfon, Diallylphthalat, Triallylamin, Triallylcyanurat, Triallylisocyanurat, 1,2-Polybutadien, N,N'-m-Phenylenmaleimid, 2,4-Toluylenbis(maleimid) und/oder Triallyltrimellitat, Acrylate und Methacrylate von mehrwertigen, vorzugsweise 2- bis 4-wertigen C2 bis C10 Alkoholen, Ethylenglykol, Propandiol-1,2, Butandiol, Hexandiol, Polyethylenglykol mit 2 bis 20, vorzugsweise 2 bis 8 Oxyethyleneinheiten, Neopentylglykol, Bisphenol-A, Glycerin, Trimethylolpropan, Pentaerythrit und Sorbit, Trimethylolpropantrimethacrylat (TMPTMA), Dimethylenglykoldimethacrylat (EGDMA), ungesättigten Polyestern aus aliphatischen Di- und Polyolen und Maleinsäure, Fumarsäure, und/oder Itaconsäure und/oder Polyallylaminen.

**6.** Verwendung nach einem der Ansprüche 1 bis 5, **dadurch gekennzeichnet, dass** das polymere Material durch nachträgliche Vernetzung nach der Polymerisation mittels Vernetzungsmitteln vernetzt ist, wobei die Vernetzungsmittel aus der Gruppe ausgewählt werden, die umfasst: als organische Peroxide, Dicumylperoxid, tert.-Butylcumylperoxid, Bis-(tert.-butyl-peroxy-isopropyl)benzol, Di-tert.-butylperoxid, 2,5-Dimethylhexan-2,5-dihydroperoxid, 2,5-Dimethylhexin-3,2,5-dihydroperoxid, Dibenzoylperoxid, Bis-(2,4-dichlorobenzoyl)peroxid, tert.-Butylperbenzoat, als organische Azoverbindungen, Azo-bis-isobutyronitril und Azo-bis-cyclohexannitril, als schwefelhaltige Vernetzungsmittel, Di- und Polymercaptoverbindungen, Dimercaptoethan, 1,6-Dimercaptohexan, 1,3,5-Trimercaptotriazin und /oder als Mercapto-terminierte Polysulfidkautschuke, Mercapto-terminierte Umsetzungsprodukte von Bis-Chlorethylformal mit Natrzumpolysulfid.

**7.** Verwendung nach einem der Ansprüche 1 bis 6, **dadurch gekennzeichnet, dass** das polymere Material Monomereinheiten mindestens auf Basis von N-[3-(Dimethylamino)propyl]methacrylamid (DMAPMA) und Trimethylolpropantrimethacrylat (TMPTMA) aufweist.

**8.** Verwendung nach einem der Ansprüche 1 bis 7, **dadurch gekennzeichnet, dass** das polymere Material einen Gelgehalt von 50 bis 99 Gew.-% aufweist.

**9.** Verwendung nach einem der Ansprüche 1 bis 8, **dadurch gekennzeichnet, dass** das polymere Material einen gewichtsmittleren Teilchendurchmesser ($d_{50}$) von kleiner als 50 $\mu$m aufweist.

**10.** Verwendung nach einem der Ansprüche 1 bis 9, **dadurch gekennzeichnet, dass** das polymere Material einen Quellungsindex von 0,5 bis 50 aufweist.

**11.** Verwendung nach einem der Ansprüche 1 bis 10, **dadurch gekennzeichnet, dass** das protonenleitfähigkeit-verleihende polymere Materials durch ein Verfahren hergestellt ist, bei dem Monomere, welche mindestens ein Monomer umfassen, die Protonenleitfähigkeit-verleihende funktionelle Gruppen aufweisen, in Masse oder in Lösung polymerisiert werden und gegebenenfalls das erhaltene polymere Material nach der Polymerisation einem Zerkleinerungsprozess unterworfen wird.

**12.** Verwendung nach Anspruch 11, **dadurch gekennzeichnet, dass** das Material einem mindestens zweistufigen Zerkleinerungsprozess unterworfen wird.

**13.** Verwendung nach einem der Ansprüche 1 bis 12, **dadurch gekennzeichnet, dass** das polymere Material als Additiv für eine Brennstoffzellen-Membran, insbesondere auf Polybenzimidazol (PBI)-Basis verwendet wird.

**14.** Verwendung nach einem der Ansprüche 1 bis 13, **dadurch gekennzeichnet, dass** das polymere Material als Additiv für die Herstellung einer Elektrode einer Brennstoffzelle verwendet wird.

**15.** Verwendung nach Anspruch 14, **dadurch gekennzeichnet, dass** das polymere Material als Additiv für die Herstellung einer Gasdiffusionselektrode einer Brennstoffzelle, insbesondere in einer Katalysatorschicht einer Gasdiffusionselektrode, verwendet wird.

**16.** Brennstoffzellen, enthaltend mindestens ein protonenleitfähigkeitverleihendes polymeres Material, wie in einem der Ansprüche 1 bis 15 definiert.

**Claims**

1. Use of polymer materials imparting proton conductivity that are prepared from monomer units using acid and/or basic functional groups and have an irregular shape with corners and edges due to the comminution process, as an additive for PBI-based membranes doped with phosphoric acid, and/or as an additive for electrodes and/or as an additive for gas-diffusion electrodes in the manufacture of phosphoric acid fuel cells.

2. The use according to claim 1, in which the polymer material has been crosslinked using at least one of the following methods:

   a) by copolymerisation with multifunctional compounds having crosslinking effect (crosslinking agents),
   b) by subsequent crosslinking after polymerization using cross-linking agents or by energy-rich radiation
   c) by continuing the polymerisation until high conversion rates are achieved,
   d) in the monomer feed process by polymerisation with high internal conversions.

3. The use according to either of claims 1 to 2, **characterised in that** the polymer material comprises monomer units based on at least one compound selected from the group of styrene, ethylene glycol methacrylate phosphate (MAEP), vinylsulfonic acid (VSA), styrenesulfonic acid (SSA), vinylphosphonic acid (VPA), N-Vinylimidazole (VID), 4- Vinylpyridine (VP), N-[3-(Dimethylamino)propyl] methacrylamide (DMAPMA), Dimethylaminoethylmethacrylate (DMAEMA), acrylamide, 2-Acrylamidoglycolic acid, 2-Acrylamido-2-methyl-1-propanesulfonic acid, acrylic acid- [2 - (((Butylamino)-carbonyl)-oxy)ethyl ester, acrylic acid-(2-diethylaminoethyl ester), acrylic acid-(2-(dimethylamino)ethyl ester), acrylic acid-(3-(dimethylamino)propyl ester), acrylic acid isopropylamide, acrylic acid phenylamide, acrylic acid- (3-sulfopropyl ester)-potassium salt, methacrylic acid amide, methacrylic acid-2-aminoethyl ester hydrochloride, methacrylic acid-(2-(tert.-butylamino)ethyl ester), methacrylic acid-((2-dimethylamino)methyl ester), methacrylic acid-(3-dimethylamino propylamide), methacrylic acid isopropyl amide, methacrylic acid-(3-sulfopropyl ester) potassium salt, 3-Vinyl aniline, 4- Vinyl aniline, N-Vinylcaprolactam, N-Vinyl formamide, 1-vinyl imidazole, 2-Vinyl pyridine, 4-Vinyl pyridine, 1-Vinyl-2-pyrrolidone, 5-Vinyl uracil, methacrylic acid glycidyl ester (GDMA), mixtures of said compounds, salts of said compounds, and the conjugated acids or bases of said compounds.

4. The use according to any one of claims 1 to 3, **characterised in that** the polymer material consists of monofunctional monomer units that have been modified by basic and / or acidic groups, and optionally polyfunctional monomer units (crosslinking agents).

5. The use according to any one of claims 1 to 4, **characterised in that** the polymer material is crosslinked with a crosslinking agent selected from the group consisting of: multifunctional monomers having at least two, preferably 2 to 4 copolymerisable C=C-double bonds, such as Diisopropenyl benzol, Divinylbenzol, Trivinylbenzol, Divinyl ether, Divinyl sulfone, Diallyl phthalate, Triallyl cyanurate, Triallylisocyanurate, 1,2-polybutadiene, N,N'-m-Phenylene maleimide, 2,4-Toluylene bis (maleimide) and/or Triallyl trimellitate, acrylates and methacrylates of polyvalent, preferably di- to tetravalent C2 to C10 alcohols, ethylene glycol, propanediol-1,2, butanediol, hexanediol, polyethylene glycol having 2 to 20, preferably 2 to 8 oxyethylene units, neopentyl glycol, bisphenol-A, glycerin, trimethylol propane, pentaerythrite and sorbite, trimethylol propane trimethacrylat (TMPTMA), dimethylene glycol dimethacrylate (EGDMA), unsaturated polyesters of aliphatic di- and polyols and maleic acid, fumaric acid and/or itaconic acid and/or polyallyl amines.

6. The use according to any one of claims 1 to 5, **characterised in that** the polymer material is crosslinked by subsequent crosslinking with crosslinking agents after polymerisation, wherein the crosslinking agents are selected from the group comprising: organic peroxides, dicumyl peroxide, tert.-butylcumyl peroxide, bis-(tert.-butyl-peroxyisopropyl)benzol, di-tert.-butyl peroxide, 2,5-Dimethylhexane-2,5-dihydroperoxide, 2,5-dimethylhexyne-3,2,5-dihydroperoxide, dibenzoyl peroxide, bis-(2,4-dichlorobenzoyl)peroxide, tert.-butylperbenzoate, as organic azo-compounds, in particular azo-bis-isobutyronitrile and azo-bis-cyclohexanenitrile, as sulfur-containing crosslinking agents, di- and polymercapto compounds, dimercaptoethane, 1,6-dimercaptohexane, 1,3,5-trimercaptotriazine and/or mercapto-terminated polysulfide rubbers, mercapto-terminated reaction products of bis-chloroethylformal with sodium polysulfide.

7. The use according to any one of claims 1 to 6, **characterised in that** the polymer material comprises monomer units based at least on N-[3-(Dimethylamino)propyl]-methacrylamide (DMAPMA) and trimethylolpropane trimethacrylate (TMPTMA).

8. The use according to any one of claims 1 to 7, **characterised in that** the polymer material contains a gel content from 50 to 99% by weight.

9. The use according to any one of claims 1 to 8, **characterised in that** the polymer material has a weight-averaged particle diameter ($d_{50}$) of less than 50 $\mu$m.

10. The use according to any one of claims 1 to 9, **characterised in that** the polymer material has a swelling index from 0.5 to 50.

11. The use according to any one of claims 1 to 10, **characterised in that** the polymer material imparting proton conductivity is prepared via a method in which monomers containing at least one monomer that includes functional groups that impart proton conductivity are polymerised in mass or in solution, and optionally the polymer material obtained undergoes a comminution process after polymerisation.

12. The use according to claim 11, **characterised in that** the material is subjected to a comminution process consisting of at least two stages.

13. The use according to any one of claims 1 to 12, **characterised in that** the polymer material is used as an additive for a fuel cell membrane, particularly on a polybenzimidazole (PBI) base.

14. The use according to any one of claims 1 to 13, **characterised in that** the polymer material is used as an additive for producing an electrode of a fuel cell.

15. The use according to claim 14, **characterised in that** the polymer material is used as an additive for producing a gas diffusion electrode of a fuel cell, particularly in a catalytic film of a gas diffusion electrode.

16. Fuel cells containing at least one polymer material imparting proton conductivity as defined in any one of claims 1 to 15.

**Revendications**

1. Utilisation de matériaux polymères conférant la capacité à conduire des protons, lesdits matériaux étant constitués d'unités monomères en présence de groupes fonctionnels acides et/ou basiques et présentant, suite à un processus de broyage, une forme irrégulière comportant des coins et des arêtes, en tant qu'additif destiné à des membranes à base de PBI dopées à l'acide phosphorique et/ou en tant qu'additif destiné à des électrodes et/ou en tant qu'additif destiné à des électrodes à diffusion de gaz entrant dans la fabrication de piles à combustible à acide phosphorique.

2. Utilisation selon la revendication 1, ledit matériau polymère ayant subi une réticulation par au moins une des actions suivantes :

   a) par copolymérisation avec des composés comportant plusieurs groupes fonctionnels et ayant un effet réticulant (agents de réticulation),
   b) par réticulation ultérieure, réalisée après la polymérisation, au moyen d'agents de réticulation ou par rayonnement à haute énergie,
   c) poursuite de la polymérisation jusqu'à obtenir un taux de réaction élevé,
   d) mise en oeuvre d'un procédé d'ajout progressif de monomères, permettant d'obtenir un taux de réaction interne élevé.

3. Utilisation selon l'une des revendications 1 à 2, **caractérisée en ce que** le matériau polymère comprend des unités monomères qui sont au moins à base d'un composé choisi dans le groupe constitué de styrène, phosphate d'éthylèneglycol-méthacrylate (MAEP), acide vinylsulfonique (VSS), acide styrènesulfonique (SSS), acide vinylphosponique (VPS), N-vinylimidazole (VID), 4-vinylpyridine (VP), N-[3-(diméthylamino)propyl]méthacrylamide (DMAPMA), diméthylaminoéthylméthacrylate (DMAEMA), acrylamide, acide 2-acrylamidoglycolique, acide 2-acrylamido-2-méthyl-1-propanesulfonique, [2-(((butylamino)-carbonyl)-oxy)éthyl]-acrylate, (2-diéthylaminoéthyl)-acrylate, (2-(diméthylamino)-éthyl)-acrylate, (3-(diméthylamino)-propyl)-acrylate, isopropylamide d'acide acrylique, phenylamide d'acide acrylique, sel de potassium de (3-sulfopropyl)-acrylate, amide d'acide méthacrylique, hydrochlorure de 2-aminoéthylméthacrylate, (2-(tert.-butylamino)-éthyl)-méthacrylate, ((2-diméthylamino)-méthyl)-méthacrylate, (3-diméthylaminopropylamide) d'acide méthacrylique, isopropylamide d'acide méthacrylique, sel de potassium de (3-sulfopropyl)-méthacrylate, 3-vinylaniline, 4-vinylaniline, N-vinylcaprolactame, N-vinylformamide, 1-vinylimidazole, 2-vinylpyridine, 4-vinylpyridine, 1-vinyl-2-pyrrolidone, 5-vinyluracile, glycidylméthacrylate (GDMA), de mélanges des composés précités, de sels des composés précités et d'acides ou de bases conjugués des composés précités.

4.  Utilisation selon l'une des revendications 1 à 3, **caractérisée en ce que** ledit matériau polymère est constitué d'unités monomères monofonctionnelles modifiées par des groupes basiques et/ou acides et, le cas échéant, d'unités monomères polyfonctionnelles (agents de réticulation).

5.  Utilisation selon l'une des revendications 1 à 4, **caractérisée en ce que** ledit matériau polymère est réticulé au moyen d'un agent de réticulation choisi dans le groupe constitué de : monomères qui comportent plusieurs groupes fonctionnels et sont pourvus d'au moins deux, préférentiellement de 2 à 4, liaisons doubles C=C susceptibles de subir une copolymérisation, diisopropénylbenzène, divinylbenzène, trivinylbenzène, divinyléther, divinylsulfone, diallylphtalate, triallylamine, triallylcyanurate, triallylisocyanurate, 1,2-polybutadiène, N,N'-m-phénylènemaléimide, 2,4-toluylène-bis(maléimide) et/ou triallyltrimellitate, acrylates et méthacrylates de polyols en $C_2$ à $C_{10}$ comportant préférentiellement 2 à 4 groupes alcool, éthylèneglycol, propane-1,2-diol, butanediol, hexanediol, polyéthylèneglycol comportant 2 à 20, préférentiellement 2 à 8, unités d'oxyéthylène, néopentylglycol, bisphénol-A, glycérol, triméthylolpropane, pentaérythritol et sorbitol, triméthylolpropanetriméthacrylate (TMPTMA), diméthylèneglycoldiméthacrylate (EGDMA), polyesters insaturés que les di- et polyols aliphatiques forment avec l'acide maléique, l'acide fumarique et/ou l'acide itaconique, et/ou polyallylamines.

6.  Utilisation selon l'une des revendications 1 à 5, **caractérisée en ce que** ledit matériau polymère est réticulé par réticulation ultérieure au moyen d'agents de réticulation, réalisée après la polymérisation, lesdits agents de réticulation étant choisis dans le groupe qui comprend : en tant que peroxydes organiques, le peroxyde de dicumyle, le peroxyde de tert.-butyle-cumyle, le bis-(tert.-butyl-peroxy-isopropyl)benzène, le peroxyde de di-tert.-butyle, le 2,5-dihydroperoxyde de 2,5-diméthylhexane, le 2,5-dihydroperoxyde de 2,5-diméthylhex-3-yne, le peroxyde de dibenzoyle, le peroxyde bis-(2,4-dichlorobenzoyle), le perbenzoate de tert.-butyle, en tant que composés azoïques organiques, l'azo-bis-isobutyronitrile et l'azo-bis-cyclohexanenitrile, en tant qu'agents de réticulation soufrés, les composés comportant plusieurs groupes mercapto, le dimercaptoéthane, le 1,6-dimercaptohexane, la 1,3,5-trimercapto-triazine et/ou le caoutchoucs de polysulfure à terminaison mercapto, les produits à terminaison mercapto issus de la réaction entre le bis-(chloroéthyle)formal et le polysulfure de sodium.

7.  Utilisation selon l'une des revendications 1 à 6, **caractérisée en ce que** ledit matériau polymère comporte des unités monomères qui sont au moins à base de N-[3-(diméthylamino)propyl]méthacrylamide (DMAPMA) et de triméthylolpropane-triméthacrylate (TMPTMA).

8.  Utilisation selon l'une des revendications 1 à 7, **caractérisée en ce que** ledit matériau polymère présente une teneur en gel comprise entre 50 et 99 % en poids.

9.  Utilisation selon l'une des revendications 1 à 8, **caractérisée en ce que** ledit matériau polymère présente une granulométrie moyenne en poids ($d_{50}$) inférieure à 50 $\mu$m.

10. Utilisation selon l'une des revendications 1 à 9, **caractérisée en ce que** ledit matériau polymère présente un indice de gonflement compris entre 0,5 et 50.

11. Utilisation selon l'une des revendications 1 à 10, **caractérisée en ce que** le matériau polymère conférant la capacité à conduire des protons est fabriqué selon un procédé consistant à soumettre des monomères, lesquels comprennent au moins un monomère pourvu de groupes fonctionnels conférant la capacité à conduire des protons, à une polymérisation en masse ou en solution, le matériau polymère ainsi obtenu étant le cas échéant soumis à un processus de broyage mis en oeuvre après la polymérisation.

12. Utilisation selon la revendication 11, **caractérisée en ce que** ledit matériau est soumis à un processus de broyage comportant au moins deux étapes.

13. Utilisation selon l'une des revendications 1 à 12, **caractérisée en ce que** ledit matériau polymère est utilisé en tant qu'additif destiné à une membrane de pile à combustible, notamment à base de polybenzimidazole (PBI).

14. Utilisation selon l'une des revendications 1 à 13, **caractérisée en ce que** ledit matériau polymère est utilisé en tant qu'additif destiné à la fabrication d'une électrode d'une pile à combustible.

**15.** Utilisation selon la revendication 14, **caractérisée en ce que** ledit matériau polymère est utilisé en tant qu'additif destiné à la fabrication d'une électrode à diffusion de gaz pour une pile à combustible, notamment dans une couche de catalyseur appartenant à une électrode à diffusion de gaz.

**16.** Piles à combustible, contenant au moins un matériau polymère conférant la capacité à conduire des protons, tel que défini dans l'une des revendications 1 à 15.

ABBILDUNG 1:

500 µm

**IN DER BESCHREIBUNG AUFGEFÜHRTE DOKUMENTE**

**In der Beschreibung aufgeführte Patentdokumente**

- DE 102007011427
- DE 102007011424
- WO 2008107192 A1
- DE 19919988 A1
- DE 10205849 A1
- WO 03063266 A2
- WO 03081691 A2
- DE 102004009396 A1
- US 4460763 A

**In der Beschreibung aufgeführte Nicht-Patentliteratur**

- **H. G. ELIAS.** Makromoleküle. Hüthig & Wepf Verlag, 1991, vol. 2, 443 ff